# EUROPÄISCHE PATENTSCHRIFT

(11) **EP 4 592 093 B1**
(45) Veröffentlichungstag und Bekanntmachung des Hinweises auf die Patenterteilung: **19.08.2026**
(21) Anmeldenummer: 25150611.9
(22) Anmeldetag: 08.01.2025
(51) Int. Cl.: B60C 9/18, B60C 9/20

(54) **NUTZFAHRZEUGREIFEN**
COMMERCIAL VEHICLE TYRE
PNEU DE VÉHICULE UTILITAIRE

(30) Priorität: 24.01.2024 DE 102024200610
(43) Veröffentlichungstag der Anmeldung: 30.07.2025
(73) Patentinhaber: Continental Reifen Deutschland GmbH, 30175 Hannover (DE)
(72) Erfinder: Plückers, Matthias, 30175 Hannover (DE)
(74) Vertreter: Continental Corporation

(56) Entgegenhaltungen:
- DE-A1- 102015 223 929
- DE-B3- 10 358 460
- JP-A- 2000 177 316
- JP-A- 2012 153 215
- US-A- 5 779 828

## Beschreibung

Die Erfindung betrifft einen Nutzfahrzeugreifen mit einem Gürtelverband mit zumindest drei aufeinanderliegenden Gürtellagen aus in eine Gürtelgummierung eingebetteten, parallel zueinander verlaufenden Festigkeitsträgern, insbesondere Korden, wobei die Gürtellagen eine radial innere Arbeitslage, eine radial äußere Arbeitslage und eine zwischen diesen befindliche 0°-Lage sind, wobei die Festigkeitsträger der 0°-Lage zur Umfangsrichtung unter einem Winkel von bis zu 5° und die Festigkeitsträger der Arbeitslagen zur Umfangsrichtung unter einem Winkel von 10° bis 35° verlaufen, wobei die Festigkeitsträger der Arbeitslagen bezüglich der Umfangsrichtung zueinander gegensinnig orientiert sind,
wobei in jedem Schulterbereich eine die Arbeitslagen voneinander separierende Gürtelkantenpolsterung enthalten ist, welche einen zwischen die Arbeitslagen hineinverlaufenden Gürtelkantenpolster und eine Gürtelkantenabdeckung mit einem die jeweilige Gürtelkante der radial inneren Arbeitslage vom Gürtelkantenpolster trennenden, radial inneren Abdeckteil und einem die jeweilige Gürtelkante der radial äußeren Arbeitslage vom Gürtelkantenpolster trennenden, radial äußeren Abdeckteil umfasst,
wobei der Gürtelkantenpolster aus einem ersten Gummimaterial und die Abdeckteile aus einem vom ersten Gummimaterial abweichenden zweiten Gummimaterial bestehen.

Ein derartiger Nutzfahrzeugreifen ist beispielsweise aus der DE 103 58 460 B3 bekannt. Dieser Nutzfahrzeugreifen weist gemäß einem Ausführungsbeispiel einen Gürtelverband mit vier jeweils insbesondere Stahlkorde enthaltenden Gürtellagen - eine radial innere Arbeitslage, eine 0°-Lage, eine radial äußere Arbeitslage und eine Schutzlage - auf. Die Stahlkorde der Arbeitslagen verlaufen zur Umfangsrichtung unter einem Winkel von 15° bis 25°, wobei die Stahlkorde der Arbeitslagen zueinander kreuzend verlaufen. Die Stahlkorde der 0°-Lage sind im Wesentlichen in Umfangsrichtung orientiert. Die Stahlkorde der Schutzlage verlaufen zur Umfangsrichtung ebenfalls unter einem Winkel von 15° bis 25° und sind bezüglich der Umfangsrichtung gleichsinnig oder gegensinnig zu den Stahlkorden der zweiten Arbeitslage geneigt. In jedem Schulterbereich ist jeweils eine die Arbeitslagen voneinander separierende Gürtelkantenpolsterung enthalten. Die Gürtelkantenpolsterung ist aus zwei aufeinander liegenden sowie zwischen die Arbeitslagen hineinverlaufenden Gürtelkantenpolstern - einem radial inneren Gürtelkantenpolster und einem radial äußeren Gürtelkantenpolster - sowie einer Gürtelkantenabdeckung mit einem die Gürtelkante der radial inneren Arbeitslage vom radial inneren Gürtelkantenpolster trennenden, radial inneren Abdeckteil und einem die Gürtelkante der radial äußeren Arbeitslage vom radial äußeren Gürtelkantenpolster trennenden, radial äußeren Abdeckteil gebildet. Die Gummimaterialen der Gürtelgummierung der radial äußeren Arbeitslage, des radial äußeren Abdeckteils, des radial äußeren Gürtelkantenpolsters, des radial inneren Gürtelkantenpolsters und des radial inneren Abdeckteils weisen jeweils einen Spannungswert bei 100% Dehnung auf, wobei die Spannungswerte bei 100% Dehnung in der genannten Reihenfolge der Bauteile stufenweise von Bauteil zu Bauteil abnehmen. Dadurch sollen dynamische Beanspruchungen wirkungsvoll von den kritischen Gürtelkanten zu weniger kritischen Bereichen transferiert werden, wodurch die ansonsten zur Rissbildung führenden Spannungsspitzen verlagert und damit die Haltbarkeit im Bereich der Gürtelkanten verbessert ist.

JP 2012 153215 A befasst sich mit Gürtelhaltbarkeit und Vermeidung unregelmäßigen Abriebs eines Schulterabschnitts in einem Reifen. DE 10 2015 223929 A1 beschreibt einen Reifen, wobei in den Schulterbereichen jeweils mehrere radial übereinander angeordnete Schulterpolster vorgesehen sind, welche sich in den Bereich der Gürtelkanten erstrecken. US 5 779 828 A beschreibt den Aufbau eines Hochbelastungsreifens. JP 2000 177316 A befasst sich mit Vorbeugung einer Trennung des Kantenbereichs einer Gürtellage und verbesserter Gürtelhaltbarkeit.

Es ist bekannt, dass bei einem Nutzfahrzeugreifen der eingangs genannten Art der Gürtelverband mit einer 0°-Lage für die Umfangssteifigkeit des Nutzfahrzeugreifens, für das Abriebverhalten des Laufstreifens und für die Haltbarkeit des Gürtelverbands günstig ist.

Die in den Arbeitslagen sich kreuzenden Festigkeitsträgern wirken beim Durchlaufen des Footprints auf eine die Lagenrandabschnitte der Arbeitslagen voneinander trennende, daher die Gürtelhaltbarkeit beeinträchtigende Weise gegeneinander. Die die Arbeitslagen voneinander separierende Gürtelkantenpolsterung, insbesondere der Gürtelkantenpolster, verringert die Gefahr der Separation der Lagenrandabschnitte der Arbeitslagen. Zusätzlich dient die Gürtelkantenpolsterung, insbesondere der Gürtelkantenpolster, als Volumenfüller zum Ausgleich der gegenüber den Arbeitslagen schmäler ausgeführten 0°-Lage. Die Gürtelkantenabdeckung der Gürtelkantenpolsterung sorgt für einen zusätzlichen Schutz des Gürtelkantenpolsters gegenüber den Gürtelkanten und trägt derart zur Verbesserung der Gürtelhaltbarkeit bei.

Der Erfindung liegt die Aufgabe zugrunde, bei einem Nutzfahrzeugreifen der eingangs genannten Art die Gürtelhaltbarkeit zu verbessern und den Rollwiderstand des Reifens zu senken.

Gelöst wird die gestellte Aufgabe erfindungsgemäß dadurch, dass die Gürtelkantenpolsterung aus dem Gürtelkantenpolster und der Gürtelkantenabdeckung gebildet ist, wobei die Abdeckteile der Gürtelkantenabdeckung den Gürtelkantenpolster kontaktieren,
- wobei das erste Gummimaterial, aus welchem der Gürtelkantenpolster besteht, einen maximalen Verlustfaktor tan δₘₐₓ bei 55°C, ermittelt nach DIN 53 513, von 0,05 bis 0,10 aufweist und
- wobei das zweite Gummimaterial, aus welchem die Abdeckteile bestehen, eine dynamische Steifigkeit E' bei 0,15% Dehnung und 55°C, ermittelt nach DIN 53 513, von 15,0 MPa bis 25,0 MPa und
eine dynamische Steifigkeit E' bei 8% Dehnung und 55°C, ermittelt nach DIN 53 513, von 5,0 MPa bis 15,0 MPa aufweist.

Die Abdeckteile weisen bedingt durch die dynamische Steifigkeit ihres Gummimaterials eine besonders hohe Rissbeständigkeit auf, sodass die Gefahr einer Rissinitiierung im Bereich der Gürtelkanten mit nachfolgender Rissfortpflanzung, insbesondere in den Bereich des an die Abdeckteile angrenzenden Gürtelkantenpolsters, signifikant reduziert und derart eine gute Haltbarkeit des Gürtelkantenpolsters und damit eine verbesserte Gürtelhaltbarkeit insgesamt sichergestellt ist. Dies gestattet es, unter Aufrechterhaltung einer guten Gürtelhaltbarkeit, das Gummimaterial des Gürtelkantenpolsters auf eine im Hinblick auf seinen Beitrag zum Rollwiderstand vorteilhaften Weise auszuführen, wobei dies durch den angegebenen maximalen Verlustfaktor des Gummimaterials des Gürtelkantenpolsters erreicht wird.

Gemäß einer bevorzugten Ausführung weist das erste Gummimaterial, aus welchem der Gürtelkantenpolster besteht,
eine dynamische Steifigkeit E' bei 0,15% Dehnung und 55°C, ermittelt nach DIN 53 513, von 3,0 MPa bis 8,0 MPa und/oder
eine dynamische Steifigkeit E' bei 8% Dehnung und 55°C, ermittelt nach DIN 53 513, von 2,0 MPa bis 7,0 MPa und/oder
eine Rückprallelastizität bei 23°C±1 °C, ermittelt nach DIN 53 512, von 52,0 bis 60,0 auf.

Die Rückprallelastizität stellt - neben dem erwähnten, maximalen Verlustfaktor tan δₘₐₓ - einen weiteren Rollwiderstandsindikator dar, wobei die angegebene Rückprallelastizität für einen besonders geringen Beitrag des Gummimaterials des Gürtelkantenpolsters zum Rollwiderstand sorgt. Zusätzlich sorgt die Rückprallelastizität dafür, dass beim Abrollen des Reifens die Temperatur im Bereich der Gürtelkanten gering gehalten wird, wodurch die Gürtelhaltbarkeit weiter verbessert ist.

Gemäß einer weiteren bevorzugten Ausführung weist das zweite Gummimaterial, aus welchem die Abdeckteile bestehen,
einen maximalen Verlustfaktor tan δₘₐₓ bei 55°C, ermittelt nach DIN 53 513, von 0,12 bis 0,17 und/oder
eine Rückprallelastizität bei 23°C±1 °C, ermittelt nach DIN 53 512, von 40,0 bis 50,0 auf.

Das Gummimaterial der Abdeckteile unterscheidet sich somit im Hinblick auf die Rollwiderstandsindikatoren, also den maximalen Verlustfaktor tan δₘₐₓ bei 55°C und der Rückprallelastizität bei 23°C±1°C, vom Gummimaterial des Gürtelkantenpolsterns deutlich.

Ferner ist es günstig, wenn die Gürtelkantenpolsterung eine in radialer Richtung sowie nicht durch die Gürtellagen hindurch gemessene, maximale Dicke von 5,0 mm bis 15,0 mm, insbesondere von 7,0 mm bis 12,0 mm, aufweist. Dies trägt zu einer weiteren Verbesserung der Gürtelhaltbarkeit unter Beibehaltung eines geringen Rollwiderstands bei.

Eine weitere bevorzugte Ausführung sieht vor, dass die Gürtelkantenpolsterung derart ausgeführt ist, dass ein Abstand, welcher zwischen der radial inneren Arbeitslage und der radial äußeren Arbeitslage sowie entlang einer in radialer Richtung durch die Gürtelkante der schmäleren Arbeitslage, welche insbesondere die radial äußere Arbeitslage ist, verlaufenden Hilfslinie gemessen ist, 2,0 mm bis 6,0 mm, insbesondere 3,0 mm bis 5,0 mm, beträgt. Dies trägt zu einer Verringerung der Gefahr der Separation der Lagenrandabschnitte der Arbeitslagen bei, sodass die Gürtelhaltbarkeit weiter verbessert ist.

Gemäß einer weiteren bevorzugten Ausführung setzt sich der Gürtelkantenpolster, im Reifenquerschnitt betrachtet, aus einem schulterseitigen Gürtelkantenpolsterabschnitt und einem zwischen die radial innere Arbeitslage und die radial äußere Arbeitslage hineinverlaufenden, innenseitigen Gürtelkantenpolsterabschnitt zusammen, wobei die Teilung in die Gürtelkantenpolsterabschnitte entlang einer in radialer Richtung durch die Gürtelkante der breiteren Arbeitslage verlaufenden Hilfslinie erfolgt, wobei die breitere Arbeitslage insbesondere die radial innere Arbeitslage ist. Dies trägt ebenfalls zu einer Verringerung der Gefahr der Separation der Lagenrandabschnitte der Arbeitslagen bei.

Bei der letztgenannten Ausführung besteht eine vorteilhafte Weiterentwicklung darin, dass der schulterseitige Gürtelkantenpolsterabschnitt, im Reifenquerschnitt betrachtet, eine zwischen der Hilfslinie und einer ihn axial außen begrenzenden, in radialer Richtung verlaufenden Begrenzungslinie ermittelte, in die axiale Richtung projizierte Breite von 5,0 mm bis 30,0 mm, insbesondere von 10,0 mm bis 20,0 mm, aufweist.

Bei der letztgenannten Ausführung besteht eine weitere vorteilhafte Weiterentwicklung darin, dass der innenseitige Gürtelkantenpolsterabschnitt, im Reifenquerschnitt betrachtet, eine zwischen der Hilfslinie und einer ihn axial innen begrenzenden, in radialer Richtung verlaufenden Begrenzungslinie ermittelte, in die axiale Richtung projizierte Breite von 15,0 mm bis 50,0 mm, insbesondere von 20,0 mm bis 45,0 mm, aufweist.

Für die Gürtelhaltbarkeit ist es ferner vorteilhaft, wenn die Abdeckteile der Gürtelkantenabdeckung, im Reifenquerschnitt betrachtet, in axialer Richtung jeweils eine Breite von 5,0 mm bis 20,0 mm, insbesondere von 10,0 mm bis 15,0 mm, aufweisen.

Außerdem ist die Gürtelhaltbarkeit, insbesondere die Haltbarkeit des Gürtelkantenpolsters, weiter verbessert, wenn jeder Abdeckteil der Gürtelkantenabdeckung jeweils
a) entweder eine Gürtelkanteneinfassung ist, welche, im Reifenquerschnitt betrachtet, symmetrisch oder asymmetrisch liegende U-förmig mit einem radial äußeren Umschlag sowie einen radial inneren Umschlag ausgeführt ist und die Gürtelkante sowie einen Lagenrandabschnitt der jeweiligen Arbeitslage einfasst,
b) oder ein Gürtelkantenstreifen ist, welcher im Reifenquerschnitt betrachtet, zwischen einem Lagenrandabschnitt der jeweiligen Arbeitslage und dem Gürtelkantenpolster verläuft sowie bevorzugt in Richtung zur nächstliegenden Seitenwand in Kontakt mit dem Gürtelkantenpolster über die Gürtelkante der jeweiligen Arbeitslage hinausverläuft.

Nachfolgend wird auf alternative, bevorzugte Ausführungsvarianten eingegangen.

Gemäß einer bevorzugten, ersten Ausführungsvariante weist der Gürtelverband genau drei Gürtellagen und somit die radial innere Arbeitslage, die radial äußere Arbeitslage und die 0°-Lage auf.

Gemäß einer bevorzugten, zweiten Ausführungsvariante weist der Gürtelverband genau vier Gürtellagen, nämlich die radial innere Arbeitslage, die radial äußere Arbeitslage, die 0°-Lage sowie eine radial innerhalb der radial inneren Arbeitslage angeordnete Sperrlage auf, wobei die Sperrlage in axialer Richtung vorzugsweise schmäler ausgeführt ist als die Arbeitslagen und wobei die Festigkeitsträger der Sperrlage - jeweils relativ zur Umfangsrichtung - unter einem Winkel von 40° bis 70°, insbesondere von 45° bis 65°, bevorzugt von bis zu 60°, besonders bevorzugt von bis zu 55°, sowie vorzugsweise gleichsteigend zu den Festigkeitsträgern der radial inneren Arbeitslage verlaufen.

Gemäß einer bevorzugten, dritten Ausführungsvariante weist der Gürtelverband genau vier Gürtellagen, nämlich die radial innere Arbeitslage, die radial äußere Arbeitslage, die 0°-Lage sowie eine radial außerhalb der radial äußeren Arbeitslage angeordnete Schutzlage auf, wobei die Schutzlage in axialer Richtung schmäler ausgeführt ist als die Arbeitslagen und wobei die Festigkeitsträger der Schutzlage - jeweils relativ zur Umfangsrichtung - unter einem Winkel von 10° bis 25°, insbesondere von 15° bis 23°, verlaufen.

Gemäß einer bevorzugten, vierten Ausführungsvariante weist der Gürtelverband genau fünf Gürtellagen, nämlich die radial innere Arbeitslage, die radial äußere Arbeitslage, die 0°-Lage, eine radial innerhalb der radial inneren Arbeitslage angeordnete Sperrlage sowie eine radial außerhalb der radial äußeren Arbeitslage angeordnete Schutzlage auf,
wobei die Sperrlage in axialer Richtung vorzugsweise schmäler ausgeführt ist als die Arbeitslagen und wobei die Festigkeitsträger der Sperrlage - jeweils relativ zur Umfangsrichtung - unter einem Winkel von 40° bis 70°, insbesondere von 45° bis 65°, bevorzugt von bis zu 60°, besonders bevorzugt von bis zu 55°, sowie vorzugsweise gleichsteigend zu den Festigkeitsträgern der radial inneren Arbeitslage verlaufen,
wobei die Schutzlage in axialer Richtung schmäler ausgeführt ist als die Arbeitslagen und wobei die Festigkeitsträger der Schutzlage - jeweils relativ zur Umfangsrichtung - unter einem Winkel von 10° bis 25°, insbesondere von 15° bis 23°, verlaufen.

Ferner ist es vorteilhaft, wenn der Festigkeitsträger der 0°-Lage ein High-Elongation-Stahlkord ist, welcher eine Bruchdehnung gemäß ASTM D 2969-04 von höchstens 7,5%, insbesondere von höchstens 6,0%, vorzugsweise von höchstens 5,5%, und besonders bevorzugt von höchstens 5,0% aufweist.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 einen Teilquerschnitt eines Nutzfahrzeugreifens im Schulterbereich mit einer ersten Ausführungsform der Erfindung,
Fig. 1a eine schematische Draufsicht auf Abschnitte der Gürtellagen des Gürtelverbands des Nutzfahrzeugreifens aus Fig. 1,
Fig. 1b Kraft-Dehnungs-Kurven von zwei Stahlkorden,
Fig. 2 einen Teilquerschnitt eines Nutzfahrzeugreifens im Schulterbereich mit einer zweiten Ausführungsform der Erfindung,
Fig. 3 einen Teilquerschnitt eines Nutzfahrzeugreifens im Schulterbereich mit einer dritten Ausführungsform der Erfindung,
Fig. 3a eine schematische Draufsicht auf Abschnitte der Gürtellagen des Gürtelverbands des Nutzfahrzeugreifens aus Fig. 3,
Fig. 4 einen Teilquerschnitt eines Nutzfahrzeugreifens im Schulterbereich mit einer vierten Ausführungsform der Erfindung,
Fig. 4a eine schematische Draufsicht auf Abschnitte der Gürtellagen des Gürtelverbands des Nutzfahrzeugreifens aus Fig. 4,
Fig. 5 einen Teilquerschnitt eines Nutzfahrzeugreifens im Schulterbereich mit einer fünfen Ausführungsform der Erfindung,
Fig. 5a eine schematische Draufsicht auf Abschnitte der Gürtellagen des Gürtelverbands des Nutzfahrzeugreifens aus Fig. 5,
Fig. 6 einen Teilquerschnitt eines Nutzfahrzeugreifens im Schulterbereich mit einer sechsten Ausführungsform der Erfindung und
Fig. 7 einen Teilquerschnitt eines Nutzfahrzeugreifens im Schulterbereich mit einer siebten Ausführungsform der Erfindung.

Gemäß der Erfindung ausgeführte Nutzfahrzeugreifen sind Reifen für mehrspurige Nutzfahrzeuge, insbesondere für Lastkraftwagen oder Busse, sowie vorzugsweise Fahrzeugluftreifen in Radialbauart, wobei die Nutzfahrzugreifen bevorzugt für Felgen mit einem Felgendurchmesser 17,5, 19,5, 22,5 oder 24,5 Zoll vorgesehen sind.

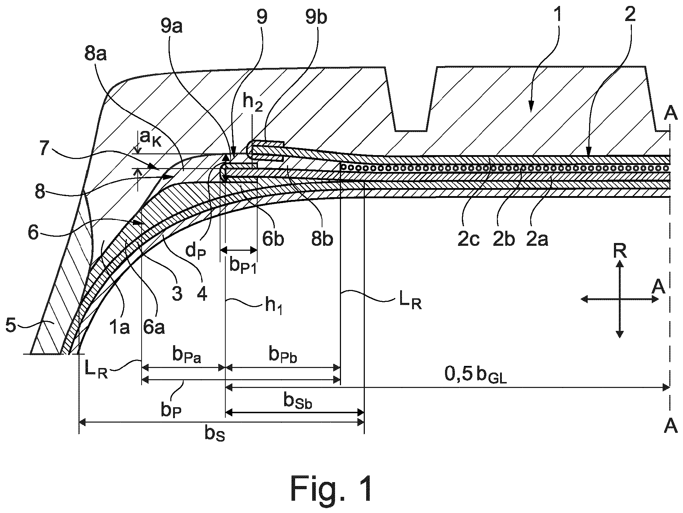

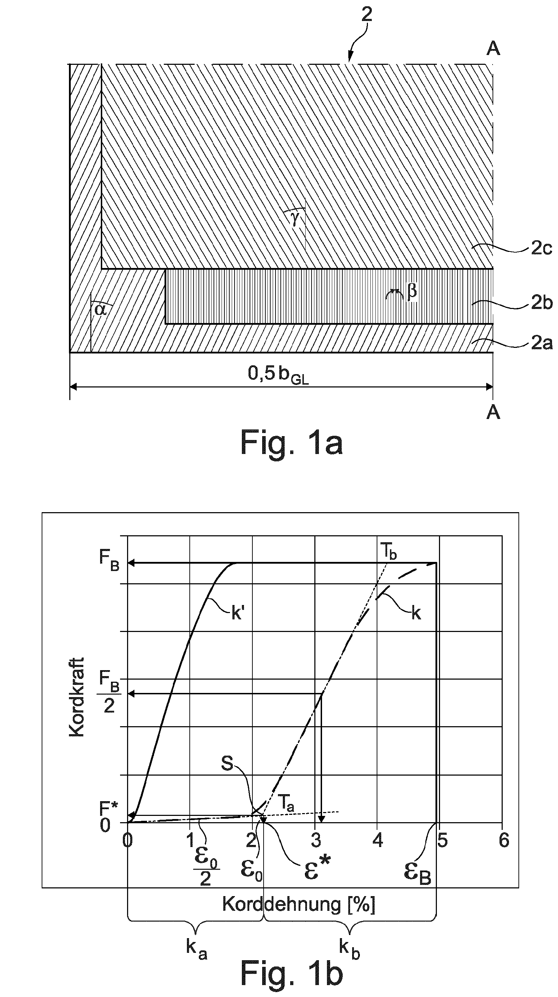

Fig. 1 bis Fig. 7 zeigen je einen Teilquerschnitt durch einen Nutzfahrzeugreifen im Schulterbereich. Der nicht gezeigte Schulterbereich ist analog zum jeweils gezeigten Schulterbereich gestaltet.

Die Reifenäquatorialebene ist durch eine Linie A-A, die radiale Richtung ist durch einen Doppelpfeil R und die axiale Richtung ist durch einen Doppelpfeil A gekennzeichnet. Unter der "axialen Richtung" wird die senkrecht zur Reifenäquatorialebene verlaufende Richtung verstanden. Unter der "radialen Richtung" wird die im in axialer Richtung ausgerichteten Querschnitt (nachfolgend als Reifenquerschnitt bezeichnet) parallel zur Reifenäquatorialebene verlaufende Richtung verstanden. Die nachfolgenden Dimensionsangaben beziehen sich auf den vulkanisierten, nicht auf einer Felge montierten Nutzfahrzeugreifen.

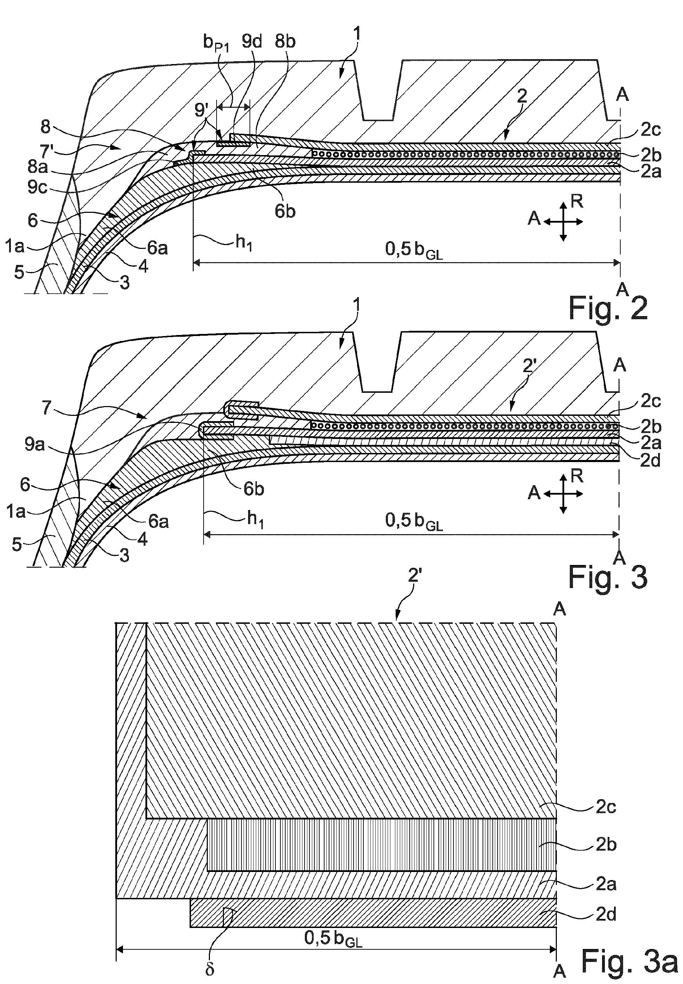

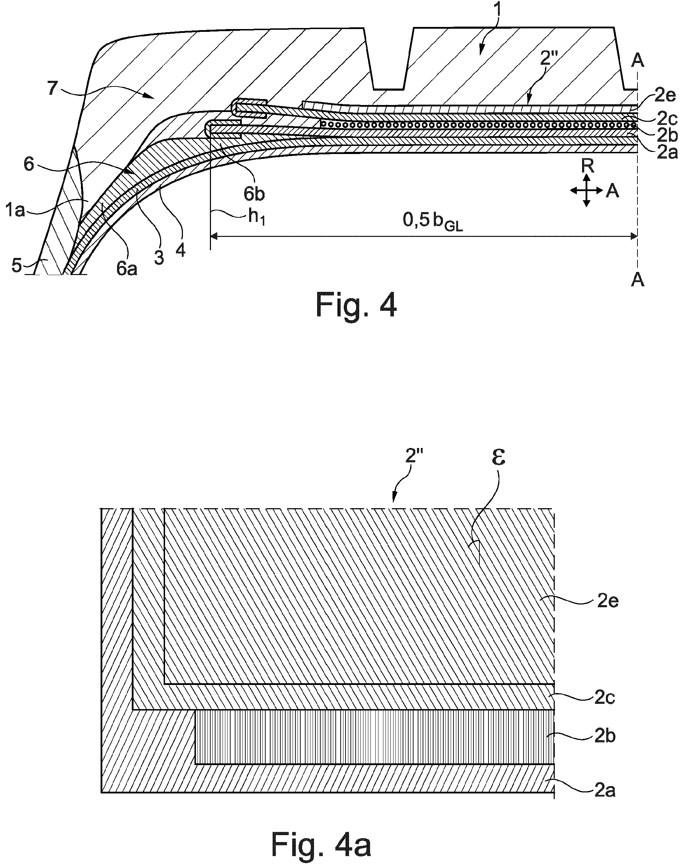

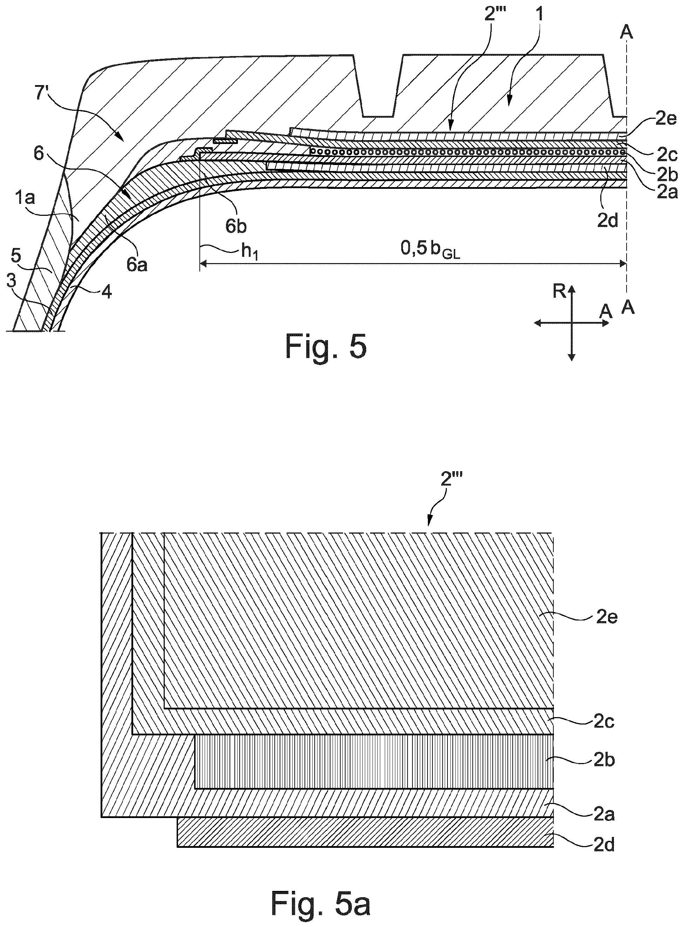

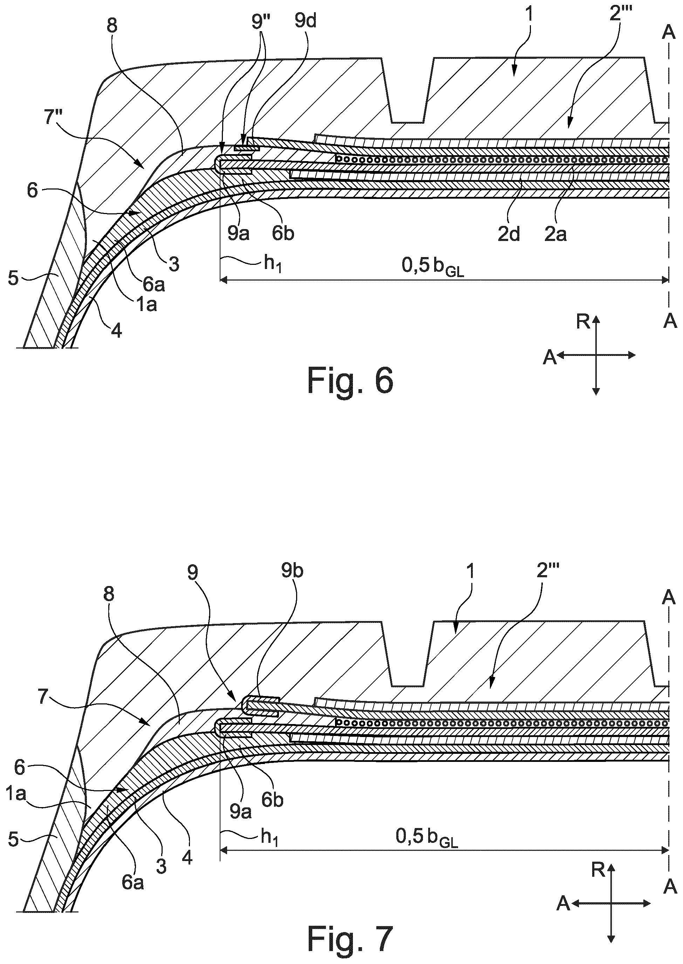

Der Nutzfahrzeugreifen weist einen profilierten Laufstreifen 1, einen Gürtelverband 2 (Fig. 1, Fig. 2), 2' (Fig. 3), 2" (Fig. 4), 2‴ (Fig. 5, Fig. 6, Fig. 7), eine Karkasseinlage 3, eine luftdichte Innenschicht 4, Seitenwände 5 und in jedem Schulterbereich ferner einen radial inneren Schulterpolster 6 sowie eine mehrteilige, radial äußere Gürtelkantenpolsterung 7 (Fig. 1, Fig. 3, Fig. 4, Fig. 7), 7' (Fig. 2, Fig. 5), 7" (Fig. 6) auf. Sämtlich der genannten Bauteile sind in Umfangsrichtung umlaufende Bauteile.

Der Laufstreifen 1, die Karkasseinlage 3, die Innenschicht 4 und die Seitenwände 5 sind in insbesondere bekannter Weise ausgeführt. Der Laufstreifen 1 weist, im Reifenquerschnitt betrachtet, auslaufende Schulterabschnitte 1a auf, welche von der jeweiligen in radialer Richtung auslaufenden Seitenwand 5 reifenaußenseitig überlappt sind. Die Karkasseinlage 3 weist zumindest eine Karkasslage aus in Gummi einbetteten Stahlkorden auf.

Der Gürtelverband 2 (Fig. 1, Fig. 1a, Fig. 2), 2' (Fig. 3, Fig. 3a), 2" (Fig. 4, Fig. 4a), 2‴ (Fig. 5, Fig. 5a, Fig. 6, Fig. 7) befindet sich in bekannter Weise zwischen dem Laufstreifen 1 und der Karkasseinlage 3 und weist - je nach Ausführung und wie nachfolgend genauer erläutert wird - verschieden ausgeführte Gürtellagen (radial innere Arbeitslage 2a, 0°-Lage 2b, radial äußere Arbeitslage 2c, Sperrlage 2d, Schutzlage 2e) aus jeweils in einer Gürtelgummierung eingebetteten, parallel zueinander verlaufenden Stahlkorden auf. Die jeweils breiteste Gürtellage weist, im Reifenquerschnitt betrachtet, in axialer Richtung eine Breite b_{GL} auf.

Die Stahlkorde der radial inneren Arbeitslage 2a, der radial äußeren Arbeitslage 2c, der Sperrlage 2d und der Schutzlage 2e sind in insbesondere bekannter Weise ausgebildet, wobei die Stahlkorde innerhalb jeder dieser Gürtellagen übereinstimmend ausgeführt sind. Ferner ist es bevorzugt, wenn die Stahlkorde in der radial inneren Arbeitslage 2a, der radial äußeren Arbeitslage 2c, der Sperrlage 2d und der Schutzlage 2e übereinstimmend ausgeführt sind. Alternativ können sich die Stahlkorde in den genannten Gürtellagen auch voneinander unterscheiden, sodass beispielsweise in der radial inneren Arbeitslage 2a ein anderer Stahlkord als in der Sperrlage 2d enthalten ist.

Der Stahlkord der 0°-Lage 2b ist bevorzugt ein High-Elongation-Stahlkord, dessen Eigenschaften nachfolgend kurz erläutert werden. Fig. 1b zeigt ein Kraft-Dehnungs-Diagramm, in welchem zwei nach ASTM D 2969-04 (31.12.2010) gemessene, exemplarische Kraft-Dehnungs-Kurven k, k' eingetragen sind. In bekannter Weise ist auf der Abszisse die Korddehnung in % und auf der Ordinate die auf den Kord wirkende Kraft (Kordkraft) aufgetragen. Die Kraft-Dehnungs-Kurve k' stammt von der Messung eines Stahlkords der Konstruktion 2 x 0,30 HT, welcher ein für Gürtellagen üblicher Stahlkord ist. Die Kraft-Dehnungs-Kurve k' dient somit lediglich als Vergleichskurve. Die Kraft-Dehnungs-Kurve k stammt von eingesetzten High-Elongation-Stahlkord. Bei der Prüfung durchläuft der High-Elongation-Stahlkord zunächst eine strukturelle Dehnungsphase (im Wesentlichen gerade verlaufender Kurvenabschnitt kₐ) und anschließend eine elastische Deformationsphase (Kurvenabschnitt k_{b} mit einem Wendepunkt), welche durch den Bruch des High-Elongation-Stahlkords bei einer Bruchkraft F_{B} und einer Bruchdehnung ε_{B} beendet wird. Der Übergang der strukturellen Dehnungsphase (Kurvenabschnitt kₐ) zur elastischen Deformationsphase (Kurvenabschnitt k_{b}) erfolgt im Beispiel knapp oberhalb von 2% Korddehnung, die Bruchdehnung ε_{B} des High-Elongation-Stahlkords beträgt etwa 5%.

Zur Ermittlung des Übergangs der strukturellen Dehnungsphase (Kurvenabschnitt kₐ) zur elastischen Deformationsphase (Kurvenabschnitt k_{b}) wird nach Aufzeichnung der Kraft-Dehnungs-Kurve k zunächst die halbe Bruchkraft F_{B}/2 bestimmt. An der Stelle der halben Bruchkraft F_{B}/2 wird eine Tangente T_{b} an die Kraft-Dehnungs-Kurve angelegt. Die Tangente T_{b} schneidet die Abszisse bei einem Korddehnungswert ε₀. Nachfolgend wird der Korddehnungswert ε₀/2 ermittelt. An der Stelle des Korddehnungswerts ε₀/2 wird eine Tangente Tₐ an die Kraft-Dehnungs-Kurve k angelegt, welche bedingt durch den dortigen flachen Verlauf der Kraft-Dehnungs-Kurve k mit dieser im Wesentlichen zusammenfällt. Der Übergang der strukturellen Dehnungsphase (Kurvenabschnitt kₐ) zur elastischen Deformationsphase (Kurvenabschnitt k_{b}) ist durch den Schnittpunkt S der Tangente Tₐ mit der Tangente T_{b} definiert.

Die High-Elongation-Stahlkorde weisen am Übergang (Schnittpunkt S) der strukturellen Dehnungsphase (Kurvenabschnitt kₐ) zur elastische Deformationsphase (Kurvenabschnitt k_{b}) eine Korddehnungswert ε* von 1,5% bis 3,0%, insbesondere von bis zu 2,5%, und einen Kordkraftwert F* von maximal 25% der Bruchkraft F_{B}, insbesondere von maximal 15% der Bruchkraft F_{B}, vorzugsweise von maximal 10% der Bruchkraft F_{B}, und besonders bevorzugte von maximal 5% der Bruchkraft F_{B} auf. Die Bruchdehnung ε_{B} des High-Elongation-Stahlkords beträgt höchstens 7,5%, insbesondere höchstens 6,0%, vorzugsweise höchstens 5,5%, und besonders bevorzugt höchstens 5,0%. Die Bruchkraft F_{B} des High-Elongation-Stahlkords beträgt vorzugsweise 300 N bis 2200 N, insbesondere 800 N bis 1500 N.

High-Elongation-Stahlkorde, welche das oben beschriebene Dehnungsverhalten aufweisen, sind beispielsweise Stahlkorde der Konstruktion 3x7x0,22 HT, 2x4x0,20 NT oder 3x3x0,20 HT.

Gemäß Fig. 1 bis Fig. 7 verläuft der radial innere Schulterposter 6, im Reifenquerschnitt betrachtet, radial außerhalb sowie entlang der und in Kontakt mit der Karkasseinlage 3, wobei der Schulterposter 6 in axialer Richtung langgestreckt ist, einen im Wesentlichen dreieckförmigen Querschnitt, eine in die axiale Richtung projizierte Breite bs (Fig. 1), einen zwischen dem Schulterabschnitt 1a und der Karkasseinlage 3 hineinverlaufenden, schulterseitigen Polsterabschnitt 6a und einen zwischen der Karkasseinlage 3 und der jeweiligen ersten (radial innersten) Gürtellage - welche je nach Ausführung, wie noch erläutert wird, eine radial innere Arbeitslage 2a oder eine Sperrlage 2d ist - liegenden, innenseitigen Polsterabschnitt 6b auf. Die "Teilung" in die Polsterabschnitte 6a, 6b erfolgt entlang einer in radialer Richtung durch die Gürtelkante der breitesten Gürtellage, welche jeweils die radial innere Arbeitslage 2a ist, verlaufenden Hilfslinie h₁. Der innenseitige Polsterabschnitt 6b verläuft ausgehend von der Gürtelkante der breitesten Gürtellage (radial innere Arbeitslage 2a), also ausgehend von der Hilfslinie h₁, unter einen Lagenrandabschnitt der jeweils radial innersten Gürtellage (radial innere Arbeitslage 2a bzw. Sperrlage 2d) hinein und dort aus und weist eine auf die Hilfslinie h₁ bezogene, in die axiale Richtung projizierte Breite b_{Sb} (Fig. 1) von 40% bis 70%, insbesondere von höchstens 50%, der Breite bs (Fig. 1) des Schulterposters 6 auf. Der Schulterpolster 6 besteht aus einem Gummimaterial, welches in insbesondere bekannter Weise ausgeführt sein kann.

Die radial äußere Gürtelkantenpolsterung 7, 7', 7" befindet sich radial außerhalb des radial inneren Schulterpolsters 6.

### Ausführungsform der Fig. 1

Bei der in Fig. 1 gezeigten Ausführungsform ist der Gürtelverband 2 in Kombination mit der Gürtelkantenpolsterung 7 vorgesehen.

Der Gürtelverband 2 weist drei Gürtellagen auf. Die erste (radial innerste) Gürtellage ist eine radial innere Arbeitslage 2a, die zweite Gürtellage ist eine 0°-Lage 2b und die dritte (radial äußerste) Gürtellage ist eine radial äußere Arbeitslage 2c, wobei die radial innere Arbeitslage 2a die breiteste Gürtellage mit der erwähnten Breite b_{GL} ist und jede Arbeitslage 2a, 2c die 0°-Lage 2b reifenaußenseitig überragt.

Wie in Fig. 1a angedeutet ist, verlaufen die Stahlkorde der radial inneren Arbeitslage 2a zur Umfangsrichtung unter einem Winkel α von 10° bis 35°, insbesondere von 15° bis 25°, vorzugsweise von bis zu 20°, beispielsweise von 18°, sowie beim Ausführungsbeispiel rechtssteigend. Alternativ können die Stahlkorde der radial inneren Arbeitslage 2a auch linkssteigend verlaufen. "Rechtssteigend verlaufen" bedeutet, dass die Stahlkorde, in Draufsicht mit in vertikaler Richtung ausgerichteter Umfangsrichtung betrachtet, derart relativ zur Umfangsrichtung geneigt sind, dass sie von links unten nach rechts oben verlaufen. "Linkssteigend verlaufen" bedeutet, dass die Stahlkorde, in Draufsicht mit in vertikaler Richtung ausgerichteter Umfangsrichtung betrachtet, derart relativ zur Umfangsrichtung geneigt sind, dass sie von rechts unten nach links oben verlaufen. Die Stahlkorde der 0°-Lage 2b verlaufen zur Umfangsrichtung unter einem Winkel β von bis zu 5°, insbesondere von bis zu 1°, und besonders bevorzugt von bis zu 0,3°, und daher nahezu exakt in Umfangsrichtung. Die Stahlkorde der radial äußeren Arbeitslage 2c verlaufen zur Umfangrichtung unter einem Winkel γ von α von 10° bis 35°, insbesondere von 15° bis 25°, vorzugsweise von bis zu 20°, beispielsweise von 18°, sowie bezüglich der Umfangsrichtung gegensinnig geneigt zu den Stahlkorden der radial inneren Arbeitslage 2a und daher beim Ausführungsbeispiel linkssteigend.

Die radial innere Arbeitslage 2a und die radial äußere Arbeitslage 2c sind in insbesondere bekannter Weise aus in einer Kautschukmischungsbahn eingebetteten Stahlkorden gebildet worden, wobei die Kautschukmischungsbahn aufgewickelt, abgelängt und zusammengespleißt wird. Die 0°-Gürtellage 2b ist durch Aufspulen eines gummierten Stahlkords oder eines schmalen Kautschukmischungsstreifens mit eingebetteten Stahlkorden gebildet worden. Solche Kautschukmischungsstreifen enthalten insbesondere drei bis sieben Stahlkorde.

Gemäß Fig. 1 ist die Gürtelkantenpolsterung 7 aus einem mittleren Gürtelkantenpolster 8 und einer zweiteiligen Gürtelkantenabdeckung 9 aus einer radial inneren Gürtelkanteneinfassung 9a und einer radial äußeren Gürtelkanteneinfassung 9b gebildet.

Der mittlere Gürtelkantenpolster 8 verläuft zwischen die radial innere Arbeitslage 2a und die radial äußere Arbeitslage 2c hinein, endet an der 0°-Lage 2b und separiert derart den axial seitlich über die Gürtelkante der 0°-Lage 2b hinausverlaufenden Lagenrandabschnitt der radial inneren Arbeitslage 2a vom axial seitlich über die Gürtelkante der 0°-Lage 2b hinausverlaufenden Lagenrandabschnitt der radial äußeren Arbeitslage 2c.

Die Gürtelkantenpolsterung 7 - also der mittlere Gürtelkantenpolster 8 gemeinsam mit der zweiteiligen Gürtelkantenabdeckung 9 - weist eine nicht durch die Gürtellagen 2a, 2b, 2c sowie in radialer Richtung gemessene, maximale Dicke d_{P} (Dicke an der dicksten Stelle) von 5,0 mm bis 15,0 mm, insbesondere von 7,0 mm bis 12,0 mm, auf. Die Ermittlung der maximalen Dicke d_{P} erfolgt daher entweder im Bereich außerhalb der Arbeitslagen 2a, 2c im Bereich zwischen den Arbeitslagen 2a, 2c oder im Bereich einer Gürtelkante - je nach dem an welcher Stelle die maximale Dicke vorliegt. Die Ausgestaltung der Gürtelkantenpolsterung 7 ist ferner derart, dass ein zwischen der radial inneren Arbeitslage 2a und der radial äußeren Arbeitslage 2b sowie entlang einer in radialer Richtung durch die Gürtelkante der schmäleren Arbeitslage, also der radial äußeren Arbeitslage 2c, verlaufenden Hilfslinie h₂ gemessener gegenseitiger Abstand a_{K} 2,0 mm bis 6,0 mm, insbesondere 3,0 mm bis 5,0 mm, beträgt.

Der mittlere Gürtelkantenpolster 8 ist, im Reifenquerschnitt betrachtet, in axialer Richtung langgestreckt, wobei die axiale Erstreckung durch zwei in radialer Richtung verlaufende Begrenzungslinien L_{R}, welche durch die in axialer Richtung am weitesten voneinander beabstandeten Stellen des mittleren Gürtelkantenpolsters 8 verlaufen, definiert ist. Der mittlere Gürtelkantenpolster 8 weist eine zwischen den Begrenzungslinien L_{R} ermittelte, in die axiale Richtung projizierte Breite b_{P} auf, welche größer ist als der erwähnte Abstand a_{K} und setzt sich aus einem schulterseitigen Gürtelkantenpolsterabschnitt 8a und einem zwischen die radial innere Arbeitslage 2a und die radial äußere Arbeitslage 2c hineinverlaufenden, in Richtung Reifenäquatorialebene an der 0°-Lage 2b endenden, innenseitigen Gürtelkantenpolsterabschnitt 8b zusammen, wobei die "Teilung" des mittleren Gürtelkantenpolsters 8 - analog zur "Teilung" des Schulterpolsters 6 - entlang der bereits erwähnten Hilfslinie h₁ erfolgt. Der schulterseitige Gürtelkantenpolsterabschnitt 8a weist eine zwischen der Hilfslinie h₁ und der entsprechenden Begrenzungslinie L_{R} ermittelte, in die axiale Richtung projizierte Breite b_{Pa} von 5,0 mm bis 30,0 mm, insbesondere von 10,0 mm bis 20,0 mm, auf. Der innenseitige Gürtelkantenpolsterabschnitt 8b weist eine zwischen der Hilfslinie h₁ und der entsprechenden Begrenzungslinie L_{R} ermittelte, in die axiale Richtung projizierte Breite b_{Pb} von 15,0 mm bis 50,0 mm, insbesondere von 20,0 mm bis 45,0 mm, auf.

Die radial innere Gürtelkanteneinfassung 9a und die radial äußere Gürtelkanteneinfassung 9b sind, im Reifenquerschnitt betrachtet, symmetrisch liegende U-förmig ausgeführt, fassen die Gürtelkante und einen Lagenrandabschnitt der radial inneren Arbeitslage 2a (radial innere Gürtelkanteneinfassung 9a) bzw. einen Lagenrandabschnitt der radial äußeren Arbeitslage 2c (radial äußerer Gürtelkanteneinfassung 9b) ein, weisen jeweils einen radial äußeren Umschlag und einen radial inneren Umschlag auf und trennen derart den mittleren Gürtelkantenpolster 8 von den in radialer Richtung angrenzenden Gürtelkanten. Die Gürtelkanteneinfassungen 9a, 9b weisen in axialer Richtung jeweils eine Breite b_{P1} von 5,0 mm bis 20,0 mm, insbesondere von 10,0 mm bis 15,0 mm, auf. Die Breite b_{P1} bezieht sich auf zwei in radialer Richtung verlaufende Hilfslinien (in Fig. 1 nicht bezeichnet), welche durch die in axialer Richtung am weitesten voneinander beabstandeten Stellen der jeweiligen Gürtelkanteneinfassung 9a, 9b verlaufen.

Der mittlere Gürtelkantenpolster 8 besteht aus einem im Hinblick auf seinen Beitrag zum Rollwiderstand des Reifens optimierten Gummimaterial, wobei als primärer Indikator für den Rollwiderstand der maximale Verlustfaktor tan δₘₐₓ bei einer Temperatur von 55°C gemäß DIN 53 513 und als sekundärer Indikator für den Rollwiderstand die Rückprallelastizität bei einer Temperatur von 23°C±1 °C gemäß DIN 53 512 herangezogen wird. Ein kleinerer maximaler Verlustfaktor δₘₐₓ bei einer Temperatur von 55°C bedeutet einen geringeren (besseren) Rollwiderstand. Eine größere Rückprallelastizität bei einer Temperatur von 23°C±1°C bedeutet ebenfalls einen geringeren (besseren) Rollwiderstand.

Die radial innere Gürtelkanteneinfassung 9a und die radial äußere Gürtelkanteneinfassung 9b bestehen aus einem im Hinblick auf seine Rissbeständigkeit optimierten Gummimaterial, wobei als Indikator für die Rissbeständigkeit die dynamische Steifigkeit E' bei 0,15% Dehnung und einer Temperatur von 55°C sowie die dynamische Steifigkeit E' bei 8% Dehnung und einer Temperatur von 55°C - jeweils ermittelt nach DIN 53 513 - herangezogen werden, wobei größere dynamische Steifigkeiten E' bei den angegebenen Dehnungen und der angegebenen Temperatur mit einer besseren (höheren) Rissbeständigkeit einhergehen.

Die Messparamater zur Ermittlung des maximalen Verlustfaktors tan δₘₐₓ, der dynamischen Steifigkeit E' bei 0,15% Dehnung und der dynamische Steifigkeit E' bei 8% Dehnung waren folgende:
Ermittlung nach DIN 53 513:
- Prüfung von Kautschuk und Elastomeren - Bestimmung der viskoelastischen Eigenschaften von Elastomeren bei erzwungenen Schwingungen außerhalb der Resonanz
- Ausgabe 1990-03
- Maximaler Verlustfaktor tan δₘₐₓ, dynamische Steifigkeit E' bei 0,15% Dehnung, dynamische Steifigkeit E' bei 8% Dehnung ermittelt aus temperaturabhängiger dynamisch-mechanischer Messung mittels Eplexor
- Vulkanisationsparameter (Herstellung der Prüfkörper):
   ∘ Vulkanisationstemperatur 160°C
   ∘ Vulkanisationszeit 15 Minuten
- Messparameter:
   ∘ 20% Kompression
   ∘ Frequenz 10 Hz
   ∘ Strain Sweep (Dehnungsdurchlauf)
      ▪ 0,15% Dehnungsamplitude (dynamischen Steifigkeit E' bei 0,15% Dehnung)
      ▪ 8,0% Dehnungsamplitude (dynamischen Steifigkeit E' bei 8% Dehnung)
   ∘ Temperatur von 55°C

Die Rückprallelastizität bei einer Temperatur von 23°C±1°C wurde wie folgt ermittelt:
Ermittlung nach DIN 53 512:
- Prüfung von Kautschuk und Elastomeren - Bestimmung der Rückprallelastizität (Schob-Pendel)
- Ausgabe 2000-04
- Dicke der Prüfkörper 6,3 mm ± 0,3 mm
- Vulkanisationsparameter (Herstellung der Prüfkörper):
   ∘ Vulkanisationstemperatur 160°C
   ∘ Vulkanisationszeit 15 Minuten
- Messparameter:
   ∘ Wie in der Norm angegeben sowie bei einer Temperatur von 23°C±1°C

Das Gummimaterial des mittleren Gürtelkantenpolsters 8 weist folgende Werte für die obigen Vulkanisateigenschaften auf:
- Maximaler Verlustfaktor tan δₘₐₓ (55°C) = 0,05 bis 0,10
- Dynamische Steifigkeit E' (0,15% Dehnung, 55°C) = 3,0 MPa bis 8,0 MPa
- Dynamische Steifigkeit E' (8% Dehnung, 55°C) = 2,0 MPa bis 7,0 MPa
- Rückprallelastizität (23°C±1°C) = 52,0 bis 60,0.

Das Gummimaterial der Gürtelkanteneinfassungen 9a, 9b weist folgende Werte für die obigen Vulkanisateigenschaften auf:
- Maximaler Verlustfaktor tan δₘₐₓ (55°C) = 0,12 bis 0,17
- Dynamische Steifigkeit E' (0,15% Dehnung, 55°C) = 15,0 MPa bis 25,0 MPa
- Dynamische Steifigkeit E' (8% Dehnung, 55°C) = 5,0 MPa bis 15,0 MPa
- Rückprallelastizität (23°C±1°C) = 40,0 bis 50,0

### Ausführungsform der Fig. 2

Bei der in Fig. 2 gezeigten Ausführungsform ist der Gürtelverband 2 (übereinstimmend zur Ausführungsform der Fig. 1 und Fig. 1a) in Kombination mit der Gürtelkantenpolsterung 7' vorgesehen.

Die Gürtelkantenpolsterung 7' ist aus einem mittleren Gürtelkantenpolster 8 (übereinstimmend zur Ausführungsform der Fig. 1) und einer zweiteiligen Gürtelkantenabdeckung 9' aus einem radial inneren Gürtelkantenstreifen 9c und einem radial äußeren Gürtelkantenstreifen 9d gebildet.

Der radial innere Gürtelkantenstreifen 9c und der radial äußere Gürtelkantenstreifen 9d sind, im Reifenquerschnitt betrachtet, streifenförmig ausgeführt und jeweils im Gürtelkantenpolster 8 eingebettet. Der radial innere Gürtelkantenstreifen 9c ist abschnittsweise im schulterseitigen Gürtelkantenpolsterabschnitt 8a und abschnittsweise im innenseitigen Gürtelkantenpolsterabschnitt 8b eingebettet, verläuft über einen Lagenrandabschnitt der radial inneren Arbeitslage 2a und in Richtung zur nächstliegenden Seitenwand 5 über die Gürtelkante der radial inneren Arbeitslage 2a hinaus sowie auf dem schulterseitigen Polsterabschnitt 6a des Schulterpolster 6. Der radial äußere Gürtelkantenstreifen 9d ist im innenseitigen Gürtelkantenpolsterabschnitt 8b eingebettet, verläuft über einen Lagenrandabschnitt der radial äußeren Arbeitslage 2c und in Richtung zur nächstliegenden Seitenwand 5 über die Gürtelkante der radial äußeren Arbeitslage 2c hinaus. Die Gürtelkantenstreifen 9c, 9d weisen in axialer Richtung jeweils eine Breite b_{P1} (übereinstimmend ermittelt zu den Gürtelkanteneinfassungen 9a, 9b der Ausführungsform der Fig. 1, Breite b_{P1} nur bei Gürtelkantenstreifen 9d eingezeichnet) von 5,0 mm bis 20,0 mm, insbesondere von 10,0 mm bis 15,0 mm, auf und bestehen aus einem Gummimaterial, welches übereinstimmend zum Gummimaterial der radial inneren Gürtelkanteneinfassung 9a und der radial äußeren Gürtelkanteneinfassung 9b (entsprechend der Ausführungsform der Fig. 1) ausgeführt ist.

### Ausführungsform der Fig. 3

Bei der in Fig. 3 gezeigten Ausführungsform ist der Gürtelverband 2' in Kombination mit der Gürtelkantenpolsterung 7 (übereinstimmend zur Ausführungsform Fig. 1) vorgesehen.

Der Gürtelverband 2' weist vier Gürtellagen auf. Wie Fig. 3 in Kombination mit Fig. 3a zeigt, ist die erste (radial innerste) Gürtellage eine Sperrlage 2d, die zweite Gürtellage eine radial innere Arbeitslage 2a (übereinstimmend zur Ausführungsform der Fig. 1), die dritte Gürtellage eine 0°-Lage 2b (übereinstimmend zur Ausführungsform der Fig. 1) und die vierte (radial äußerste) Gürtellage eine radial äußere Arbeitslage 2c (übereinstimmend zur Ausführungsform der Fig. 1), wobei die radial innere Arbeitslage 2a die breiteste Gürtellage mit der erwähnten Breite b_{GL} ist.

Die Stahlkorde der Sperrlage 2d verlaufen zur Umfangsrichtung unter einem Winkel δ (Fig. 3a) von 40° bis 70°, insbesondere von 45° bis 65°, bevorzugt von bis zu 60°, besonders bevorzugt von bis zu 55°, sowie gleichsteigend zu den Stahlkorden der radial inneren Arbeitslage 2a.

Gemäß Fig. 3 endet die radial innere Gürtelkanteneinfassung 9a vorzugsweise in einem in axialer Richtung ermittelten Abstand vor der Sperrlage 2d.

### Ausführungsform der Fig. 4

Bei der in Fig. 4 gezeigten Ausführungsform ist der Gürtelverband 2" in Kombination mit der Gürtelkantenpolsterung 7 (übereinstimmend zur Ausführungsform der Fig. 1) vorgesehen.

Der Gürtelverband 2" weist vier Gürtellagen auf. Wie Fig. 4 in Kombination mit Fig. 4a zeigt, ist die erste (radial innerste) Gürtellage eine radial innere Arbeitslage 2a (übereinstimmend zur Ausführungsform der Fig. 1), die zweite Gürtellage eine 0°-Lage 2b (übereinstimmend zur Ausführungsform der Fig. 1), die dritte Gürtellage eine radial äußere Arbeitslage 2c (übereinstimmend zur Ausführungsform der Fig. 1) und die vierte (radial äußerste) Gürtellage eine Schutzlage 2e.

Die Schutzlage 2e weist axialer Richtung eine kleinere Breite auf als die Arbeitslagen 2a, 2c. Die Stahlkorde der Schutzlage 2e verlaufen zur Umfangsrichtung unter einem Winkel ε (Fig. 4a) von 10° bis 25°, insbesondere von 15° bis 23°, beispielsweise 18°, sowie rechtssteigend oder - wie bei der gezeigten Ausführungsform zutreffend - linkssteigend.

### Ausführungsform der Fig. 5

Bei der in Fig. 5 gezeigten Ausführungsform ist der Gürtelverband 2‴ in Kombination mit der Gürtelkantenpolsterung 7' (übereinstimmend zur Ausführungsform der Fig. 2) vorgesehen.

Der Gürtelverband 2‴ weist fünf Gürtellagen auf. Wie Fig. 5 in Kombination mit Fig. 5a zeigt, ist die erste (radial innerste) Gürtellage eine Sperrlage 2d (übereinstimmend zur Ausführungsform der Fig. 3), die zweite Gürtellage eine radial innere Arbeitslage 2a (übereinstimmend zur Ausführungsform der Fig. 1), die dritte Gürtellage eine 0°-Lage 2b (übereinstimmend zur Ausführungsform der Fig. 1), die vierte Gürtellage eine radial äußere Arbeitslage 2c (übereinstimmend zur Ausführungsform der Fig. 1) und die fünfte Gürtellage eine Schutzlage 2e (übereinstimmend zur Ausführungsform der Fig. 4).

### Ausführungsform der Fig. 6

Bei der in Fig. 6 gezeigten Ausführungsform ist der Gürtelverband 2‴ (übereinstimmend zur Ausführungsform der Fig. 5) in Kombination mit der Gürtelkantenpolsterung 7" vorgesehen.

Die Gürtelkantenpolsterung 7" ist aus einem mittigen Gürtelkantenpolster 8 (übereinstimmend zur Ausführungsform der Fig. 1) und einer zweiteiligen Gürtelkantenabdeckung 9" aus einer radial inneren Gürtelkanteneinfassung 9a und einem radial äußeren Gürtelkantenstreifen 9d gebildet.

### Ausführungsform der Fig. 7

Bei der in Fig. 7 gezeigten Ausführungsform ist der Gürtelverband 2‴ (übereinstimmend zur Ausführungsform der Fig. 5) in Kombination mit der Gürtelkantenpolsterung 7 (übereinstimmend zur Ausführungsform der Fig. 1) vorgesehen.

Es ist daher eine Gürtelkantenabdeckung 9 aus einer radial inneren Gürtelkanteneinfassung 9a und einem radial äußeren Gürtelkanteneinfassung 9b vorgesehen.

Die Erfindung ist auf die beschriebenen Ausführungsbeispiele nicht beschränkt.

Die Gürtellagen können anstelle der Stahlkorde auch Textilkorde oder Hybridkord enthalten. Die Gürtelkantenstreifen können an der Gürtelkante der jeweiligen Gürtellage enden. Die Gürtelkanteneinfassungen können ferner asymmetrisch liegend U-förmig ausgeführt sein, sodass einer der Umschläge, also der radial äußere Umschlag oder der radial innere Umschlag, länger als der jeweils andere Umschlag ausgeführt ist. Bei einer asymmetrisch liegend U-förmig ausgeführten Gürtelkanteneinfassung ist die Breite b_{P1} ebenfalls zwischen zwei in radialer Richtung verlaufenden Hilfslinien ermittelt, welche durch in axialer Richtung am weitesten voneinander beabstandeten Ende der Gürtelkanteneinfassung verlaufen.

### Bezugszeichenliste

- 1: Laufstreifen
- 1a: Schulterabschnitt
- 2, 2', 2", 2‴: Gürtelverband
- 2a: radial innere Arbeitslage
- 2b: 0°-Lage
- 2c: radial äußere Arbeitslage
- 2d: Sperrlage
- 2e: Schutzlage
- 3: Karkasseinlage
- 4: Innenschicht
- 5: Seitenwand
- 6: radial innerer Schulterpolster
- 6a: schulterseitiger Polsterabschnitt
- 6b: innenseitiger Polsterabschnitt
- 7, 7', 7": radial äußere Gürtelkantenpolsterung
- 8: mittiger Gürtelkantenpolster
- 8a: schulterseitiger Gürtelkantenpolsterabschnitt
- 8b: innenseitiger Gürtelkantenpolsterabschnitt
- 9, 9', 9": Gürtelkantenabdeckung
- 9a: radial innere Gürtelkanteneinfassung
- 9b: radial äußere Gürtelkanteneinfassung
- 9c: radial innerer Gürtelkantenstreifen
- 9d: radial äußerer Gürtelkantenstreifen
- A-A: Linie (Reifenäquatorialebene)
- A: Doppelpfeil (axiale Richtung)
- a_{K}: Abstand
- b_{GL}: Breite
- b_{P}, b_{Pa} b_{Pb}, b_{S}, b_{Sb}: projizierte Breite
- d_{P}: maximale Dicke
- F_{B}: Bruchkraft
- F*: Kordkraftwert
- h₁, h₂: Hilfslinie
- k, k': Kraft-Dehnungs-Kurve
- kₐ, k_{b}: Kurvenabschnitt
- L_{A}, L_{R}: Begrenzungslinie
- R: Doppelpfeil (radiale Richtung)
- S: Schnittpunkt
- Tₐ, T_{b}: Tangente
- α, β, γ, δ, ε: Winkel
- ε₀, ε: Korddehnungsswert
- ε_{B}: Bruchdehnung

## Patentansprüche

1. Nutzfahrzeugreifen mit einem Gürtelverband (2, 2', 2", 2‴) mit zumindest drei aufeinanderliegenden Gürtellagen (2a, 2b, 2c) aus in eine Gürtelgummierung eingebetteten, parallel zueinander verlaufenden Festigkeitsträgern, insbesondere Korden, wobei die Gürtellagen (2a, 2b, 2c) eine radial innere Arbeitslage (2a), eine radial äußere Arbeitslage (2c) und eine zwischen diesen befindliche 0°-Lage (2b) sind, wobei die Festigkeitsträger der 0°-Lage (2b) zur Umfangsrichtung unter einem Winkel (β) von bis zu 5° und die Festigkeitsträger der Arbeitslagen (2a, 2c) zur Umfangsrichtung unter einem Winkel (α, γ) von 10° bis 35° verlaufen, wobei die Festigkeitsträger der Arbeitslagen (2a, 2c) bezüglich der Umfangsrichtung zueinander gegensinnig orientiert sind,
wobei in jedem Schulterbereich eine die Arbeitslagen (2a, 2c) voneinander separierende Gürtelkantenpolsterung (7, 7', 7") enthalten ist, welche einen zwischen die Arbeitslagen (2a, 2c) hineinverlaufenden Gürtelkantenpolster (8) und eine Gürtelkantenabdeckung (9, 9', 9") mit einem die jeweilige Gürtelkante der radial inneren Arbeitslage (2c) vom Gürtelkantenpolster (8) trennenden, radial inneren Abdeckteil (9a, 9c) und einem die jeweilige Gürtelkante der radial äußeren Arbeitslage (2c) vom Gürtelkantenpolster (8) trennenden, radial äußeren Abdeckteil (9b, 9d) umfasst,
wobei der Gürtelkantenpolster (8) aus einem ersten Gummimaterial und die Abdeckteile (9a, 9b. 9c, 9d) aus einem vom ersten Gummimaterial abweichenden zweiten Gummimaterial bestehen,
**dadurch gekennzeichnet,**
**dass** die Gürtelkantenpolsterung (7, 7', 7") aus dem Gürtelkantenpolster (8) und der Gürtelkantenabdeckung (9, 9', 9") gebildet ist, wobei die Abdeckteile (9a, 9b, 9c, 9d) der Gürtelkantenabdeckung (9, 9' ,9") den Gürtelkantenpolster (8) kontaktieren,
- wobei das erste Gummimaterial, aus welchem der Gürtelkantenpolster (8) besteht,
einen maximalen Verlustfaktor tan δₘₐₓ bei 55°C, ermittelt nach DIN 53 513, Ausgabe 1990-03, von 0,05 bis 0,10 aufweist und
- wobei das zweite Gummimaterial, aus welchem die Abdeckteile (9a, 9b, 9c, 9d) bestehen,
eine dynamische Steifigkeit E' bei 0,15% Dehnung und 55°C, ermittelt nach DIN 53 513, Ausgabe 1990-03, von 15,0 MPa bis 25,0 MPa und
eine dynamische Steifigkeit E' bei 8% Dehnung und 55°C, ermittelt nach DIN 53 513, Ausgabe 1990-03, von 5,0 MPa bis 15,0 MPa aufweist;
die Messparameter zur Ermittlung des maximalen Verlustfaktors tan δmax, der dynamischen Steifigkeit E' bei 0,15% Dehnung und der dynamische Steifigkeit E' bei 8% Dehnung ermittelt nach DIN 53 513, wobei die Prüfkörper hergestellt werden bei einer Vulkanisationstemperatur von 160°C und einer Vulkanisationszeit von 15 Minuten, sind: 20% Kompression, Frequenz 10 Hz, Strain Sweep Dehnungsdurchlauf, 0,15% Dehnungsamplitude zur Bestimmung der dynamischen Steifigkeit E' bei 0,15% Dehnung, 8,0% Dehnungsamplitude zur Bestimmung der dynamischen Steifigkeit E' bei 8% Dehnung, Temperatur 55°C.

2. Nutzfahrzeugreifen nach Anspruch 1, **dadurch gekennzeichnet, dass** das erste Gummimaterial, aus welchem der Gürtelkantenpolster (8) besteht,
eine dynamische Steifigkeit E' bei 0,15% Dehnung und 55°C, ermittelt nach DIN 53 513, Ausgabe 1990-03, von 3,0 MPa bis 8,0 MPa und/oder eine dynamische Steifigkeit E' bei 8% Dehnung und 55°C, ermittelt nach DIN 53 513, Ausgabe 1990-03, von 2,0 MPa bis 7,0 MPa und/oder eine Rückprallelastizität bei 23°C±1 °C, ermittelt nach DIN 53 512, Ausgabe 2000-04, von 52,0 bis 60,0 aufweist;
die Ermittlung der Rückprallelastizität bei 23°C±1 °C erfolgt nach DIN 53 512, wobei die Prüfkörper hergestellt werden bei einer Vulkanisationstemperatur von 160°C und einer Vulkanisationszeit von 15 Minuten, Dicke der Prüfkörper 6,3 mm ± 0,3 mm.

3. Nutzfahrzeugreifen nach Anspruch 1 oder 2, **dadurch gekennzeichnet, dass** das zweite Gummimaterial, aus welchem die Abdeckteile (9a, 9b, 9c, 9d) bestehen,
einen maximalen Verlustfaktor tan δₘₐₓ bei 55°C, ermittelt nach DIN 53 513, Ausgabe 1990-03, von 0,12 bis 0,17 und/oder
eine Rückprallelastizität bei 23°C±1 °C, ermittelt nach DIN 53 512, Ausgabe 2000-04, von 40,0 bis 50,0 aufweist.

4. Nutzfahrzeugreifen nach einem der Ansprüche 1 bis 3, **dadurch gekennzeichnet, dass** die Gürtelkantenpolsterung (7, 7', 7") eine in radialer Richtung sowie nicht durch die Gürtellagen (2a, 2b, 2c) hindurch gemessene, maximale Dicke (d_{P}) von 5,0 mm bis 15,0 mm, insbesondere von 7,0 mm bis 12,0 mm, aufweist.

5. Nutzfahrzeugreifen nach einem der Ansprüche 1 bis 4, **dadurch gekennzeichnet, dass** die Gürtelkantenpolsterung (7, 7', 7") derart ausgeführt ist, dass ein Abstand (a_{K}), welcher zwischen der radial inneren Arbeitslage (2a) und der radial äußeren Arbeitslage (2b) sowie entlang einer in radialer Richtung durch die Gürtelkante der schmäleren Arbeitslage (2a, 2b), welche insbesondere die radial äußere Arbeitslage (2c) ist, verlaufenden Hilfslinie (h₂) gemessen ist, 2,0 mm bis 6,0 mm, insbesondere 3,0 mm bis 5,0 mm, beträgt.

6. Nutzfahrzeugreifen nach einem der Ansprüche 1 bis 5, **dadurch gekennzeichnet, dass** sich der Gürtelkantenpolster (8), im Reifenquerschnitt betrachtet, aus einem schulterseitigen Gürtelkantenpolsterabschnitt (8a) und einem zwischen die radial innere Arbeitslage (2a) und die radial äußere Arbeitslage (2c) hineinverlaufenden, innenseitigen Gürtelkantenpolsterabschnitt (8b) zusammensetzt, wobei die Teilung in die Gürtelkantenpolsterabschnitte (8a, 8b) entlang einer in radialer Richtung durch die Gürtelkante der breiteren Arbeitslage (2a, 2c) verlaufenden Hilfslinie (h₁) erfolgt, wobei die breitere Arbeitslage (2a, 2c) insbesondere die radial innere Arbeitslage (2a) ist.

7. Nutzfahrzeugreifen nach Anspruch 6, **dadurch gekennzeichnet, dass** der schulterseitige Gürtelkantenpolsterabschnitt (8a), im Reifenquerschnitt betrachtet, eine zwischen der Hilfslinie (h₁) und einer ihn axial außen begrenzenden, in radialer Richtung verlaufenden Begrenzungslinie (L_{R}) ermittelte, in die axiale Richtung projizierte Breite (b_{Pa}) von 5,0 mm bis 30,0 mm, insbesondere von 10,0 mm bis 20,0 mm, aufweist.

8. Nutzfahrzeugreifen nach Anspruch 6 oder 7, **dadurch gekennzeichnet, dass** der innenseitige Gürtelkantenpolsterabschnitt (8b), im Reifenquerschnitt betrachtet, eine zwischen der Hilfslinie (h₁) und einer ihn axial innen begrenzenden, in radialer Richtung verlaufenden Begrenzungslinie (L_{R}) ermittelte, in die axiale Richtung projizierte Breite (b_{Pb}) von 15,0 mm bis 50,0 mm, insbesondere von 20,0 mm bis 45,0 mm, aufweist.

9. Nutzfahrzeugreifen nach einem der Ansprüche 1 bis 8, **dadurch gekennzeichnet, dass** die Abdeckteile (9a, 9b, 9c, 9d) der Gürtelkantenabdeckung (9, 9', 9"), im Reifenquerschnitt betrachtet, in axialer Richtung jeweils eine Breite (b_{P1}) von 5,0 mm bis 20,0 mm, insbesondere von 10,0 mm bis 15,0 mm, aufweisen.

10. Nutzfahrzeugreifen nach einem der Ansprüche 1 bis 9, **dadurch gekennzeichnet, dass** jeder Abdeckteil (9a, 9b, 9c, 9d) der Gürtelkantenabdeckung (9, 9', 9") jeweils
a) entweder eine Gürtelkanteneinfassung (9a, 9b) ist, welche, im Reifenquerschnitt betrachtet, symmetrisch oder asymmetrisch liegende U-förmig mit einem radial äußeren Umschlag sowie einen radial inneren Umschlag ausgeführt ist und die Gürtelkante sowie einen Lagenrandabschnitt der jeweiligen Arbeitslage (2a, 2c) einfasst,
b) oder ein Gürtelkantenstreifen (9c, 9d) ist, welcher im Reifenquerschnitt betrachtet, zwischen einem Lagenrandabschnitt der jeweiligen Arbeitslage (2a, 2c) und dem Gürtelkantenpolster (8) verläuft sowie bevorzugt in Richtung zur nächstliegenden Seitenwand (5) in Kontakt mit dem Gürtelkantenpolster (8) über die Gürtelkante der jeweiligen Arbeitslage (2a, 2c) hinausverläuft.

11. Nutzfahrzeugreifen nach einem der Ansprüche 1 bis 10, **dadurch gekennzeichnet, dass** der Gürtelverband (2) genau drei Gürtellagen (2a, 2b, 2c) und somit die radial innere Arbeitslage (2a), die radial äußere Arbeitslage (2c) und die 0°-Lage (2b) aufweist.

12. Nutzfahrzeugreifen nach einem der Ansprüche 1 bis 10, **dadurch gekennzeichnet, dass** der Gürtelverband (2') genau vier Gürtellagen (2a, 2b, 2c, 2d), nämlich die radial innere Arbeitslage (2a), die radial äußere Arbeitslage (2c), die 0°-Lage (2b) sowie eine radial innerhalb der radial inneren Arbeitslage (2a) angeordnete Sperrlage (2d) aufweist, wobei die Sperrlage (2d) in axialer Richtung vorzugsweise schmäler ausgeführt ist als die Arbeitslagen (2a, 2c) und wobei die Festigkeitsträger der Sperrlage (2d) - jeweils relativ zur Umfangsrichtung - unter einem Winkel (δ) von 40° bis 70°, insbesondere von 45° bis 65°, bevorzugt von bis zu 60°, besonders bevorzugt von bis zu 55°, sowie vorzugsweise gleichsteigend zu den Festigkeitsträgern der radial inneren Arbeitslage (2a) verlaufen.

13. Nutzfahrzeugreifen nach einem der Ansprüche 1 bis 10, **dadurch gekennzeichnet, dass** der Gürtelverband (2") genau vier Gürtellagen (2a, 2b, 2c, 2e), nämlich die radial innere Arbeitslage (2a), die radial äußere Arbeitslage (2c), die 0°-Lage (2b) sowie eine radial außerhalb der radial äußeren Arbeitslage (2c) angeordnete Schutzlage (2e) aufweist, wobei die Schutzlage (2e) in axialer Richtung schmäler ausgeführt ist als die Arbeitslagen (2a, 2c) und wobei die Festigkeitsträger der Schutzlage (2e) - jeweils relativ zur Umfangsrichtung - unter einem Winkel (ε) von 10° bis 25°, insbesondere von 15° bis 23°, verlaufen.

14. Nutzfahrzeugreifen nach einem der Ansprüche 1 bis 10, **dadurch gekennzeichnet, dass** der Gürtelverband (2‴) genau fünf Gürtellagen (2a, 2b, 2c, 2d, 2e), nämlich die radial innere Arbeitslage (2a), die radial äußere Arbeitslage (2c), die 0°-Lage (2b), eine radial innerhalb der radial inneren Arbeitslage (2a) angeordnete Sperrlage (2d) sowie eine radial außerhalb der radial äußeren Arbeitslage (2c) angeordnete Schutzlage (2e) aufweist,
wobei die Sperrlage (2d) in axialer Richtung vorzugsweise schmäler ausgeführt ist als die Arbeitslagen (2a, 2c) und wobei die Festigkeitsträger der Sperrlage (2d) - jeweils relativ zur Umfangsrichtung - unter einem Winkel (δ) von 40° bis 70°, insbesondere von 45° bis 65°, bevorzugt von bis zu 60°, besonders bevorzugt von bis zu 55°, sowie vorzugsweise gleichsteigend zu den Festigkeitsträgern der radial inneren Arbeitslage (2a) verlaufen,
wobei die Schutzlage (2e) in axialer Richtung schmäler ausgeführt ist als die Arbeitslagen (2a, 2c) und wobei die Festigkeitsträger der Schutzlage (2e) - jeweils relativ zur Umfangsrichtung - unter einem Winkel (ε) von 10° bis 25°, insbesondere von 15° bis 23°, verlaufen.

15. Nutzfahrzeugreifen nach einem der Ansprüche 1 bis 14, **dadurch gekennzeichnet, dass** der Festigkeitsträger der 0°-Lage (2b) ein High-Elongation-Stahlkord ist, welcher eine Bruchdehnung (ε_{B}) gemäß ASTM D 2969-04 von höchstens 7,5%, insbesondere von höchstens 6,0%, vorzugsweise von höchstens 5,5%, und besonders bevorzugt von höchstens 5,0% aufweist.

## Claims

1. Commercial vehicle tyre comprising a breaker belt assembly (2, 2', 2", 2‴) with at least three belt plies (2a, 2b, 2c) lying one on top of the other and comprising reinforcing members, in particular cords, embedded in a belt rubberizing compound and running parallel to one another, wherein the belt plies (2a, 2b, 2c) are a radially inner working ply (2a), a radially outer working ply (2c) and a 0° ply (2b) located between them, wherein the reinforcing members of the 0° ply (2b) run at an angle (β) of up to 5° in relation to the circumferential direction and the reinforcing members of the working plies (2a, 2c) run at an angle (α, γ) of 10° to 35° in relation to the circumferential direction, wherein the reinforcing members of the working plies (2a, 2c) are oriented oppositely in relation to one another with respect to the circumferential direction,
wherein each shoulder region contains a belt edge cushioning (7, 7', 7") which separates the working plies (2a, 2c) from one another and which comprises a belt edge cushion (8), running in between the working plies (2a, 2c), and a belt edge covering (9, 9', 9"), with a radially inner covering part (9a, 9c), separating the respective belt edge of the radially inner working ply (2c) from the belt edge cushion (8), and a radially outer covering part (9b, 9d), separating the respective belt edge of the radially outer working ply (2c) from the belt edge cushion (8), wherein the belt edge cushion (8) consists of a first rubber material and the covering parts (9a, 9b, 9c, 9d) consist of a second rubber material, differing from the first rubber material,
**characterized**
**in that** the belt edge cushioning (7, 7', 7") is formed by the belt edge cushion (8) and the belt edge covering (9, 9', 9"), wherein the covering parts (9a, 9b, 9c, 9d) of the belt edge covering (9, 9', 9") contact the belt edge cushion (8),
- wherein the first rubber material, of which the belt edge cushion (8) consists,
has a maximum loss factor tan δₘₐₓ at 55°C, determined in accordance with DIN 53 513, 1990-03 edition, of 0.05 to 0.10 and
- wherein the second rubber material, of which the covering parts (9a, 9b, 9c, 9d) consist,
has a dynamic stiffness E' at 0.15% elongation and 55°C, determined in accordance with DIN 53 513, 1990-03 edition, of 15.0 MPa to 25.0 MPa and
a dynamic stiffness E' at 8% elongation and 55°C, determined in accordance with DIN 53 513, 1990-03 edition, of 5.0 MPa to 15.0 MPa;
the measurement parameters for determining the maximum loss factor tan δmax, the dynamic stiffness E' at 0.15% elongation and the dynamic stiffness E' at 8% elongation, determined in accordance with DIN 53 513, with the test pieces being produced at a vulcanizing temperature of 160°C and over a vulcanizing time of 15 minutes, are: 20% compression, frequency 10 Hz, strain sweep, 0.15% strain amplitude for determining the dynamic stiffness E' at 0.15% elongation, 8.0% strain amplitude for determining the dynamic stiffness E' at 8% elongation, temperature 55°C.

2. Commercial vehicle tyre according to Claim 1, **characterized in that** the first rubber material, of which the belt edge cushion (8) consists,
has a dynamic stiffness E' at 0.15% elongation and 55°C, determined in accordance with DIN 53 513, 1990-03 edition, of 3.0 MPa to 8.0 MPa and/or
has a dynamic stiffness E' at 8% elongation and 55°C, determined in accordance with DIN 53 513, 1990-03 edition, of 2.0 MPa to 7.0 MPa and/or a rebound elasticity at 23°C±1°C, determined in accordance with DIN 53 512, 2000-04 edition, of 52.0 to 60.0;
the determination of the rebound elasticity at 23°C±1 °C takes place in accordance with DIN 53 512, with the test pieces being produced at a vulcanizing temperature of 160°C and over a vulcanizing time of 15 minutes, thickness of the test pieces 6.3 mm ± 0.3 mm.

3. Commercial vehicle tyre according to Claim 1 or 2, **characterized in that** the second rubber material, of which the covering parts (9a, 9b, 9c, 9d) consist, has a maximum loss factor tan δₘₐₓ at 55°C, determined in accordance with DIN 53 513, 1990-03 edition, of 0.12 to 0.17 and/or
a rebound elasticity at 23°C±1°C, determined in accordance with DIN 53 512, 2000-04 edition, of 40.0 to 50.0.

4. Commercial vehicle tyre according to one of Claims 1 to 3, **characterized in that** the belt edge cushioning (7, 7', 7") has a maximum thickness (d_{P}), measured in the radial direction and not through the belt plies (2a, 2b, 2c), of 5.0 mm to 15.0 mm, in particular of 7.0 mm to 12.0 mm.

5. Commercial vehicle tyre according to one of Claims 1 to 4, **characterized in that** the belt edge cushioning (7, 7', 7") is configured in such a way that a distance (a_{K}), which is measured between the radially inner working ply (2a) and the radially outer working ply (2b) and along a projection line (h₂) running in the radial direction through the belt edge of the narrower working ply (2a, 2b), which is in particular the radially outer working ply (2c), is 2.0 mm to 6.0 mm, in particular 3.0 mm to 5.0 mm.

6. Commercial vehicle tyre according to one of Claims 1 to 5, **characterized in that**, when seen in the cross section of the tyre, the belt edge cushion (8) is made up of a shoulder-side belt edge cushion portion (8a) and an inner-side belt edge cushion portion (8b), running in between the radially inner working ply (2a) and the radially outer working ply (2c), wherein the division into the belt edge cushion portions (8a, 8b) takes place along a projection line (h₁) running in the radial direction through the belt edge of the wider working ply (2a, 2c), wherein the wider working ply (2a, 2c) is in particular the radially inner working ply (2a).

7. Commercial vehicle tyre according to Claim 6, **characterized in that**, when seen in the cross section of the tyre, the shoulder-side belt edge cushion portion (8a) has a width (b_{Pa}), which is determined between the projection line (h₁) and a delimiting line (L_{R}) delimiting it axially outwards and running in the radial direction and is projected in the axial direction, of 5.0 mm to 30.0 mm, in particular of 10.0 mm to 20.0 mm.

8. Commercial vehicle tyre according to Claim 6 or 7, **characterized in that**, when seen in the cross section of the tyre, the inner-side belt edge cushion portion (8b) has a width (b_{Pb}), which is determined between the projection line (h₁) and a delimiting line (L_{R}) delimiting it axially inwards and running in the radial direction and is projected in the axial direction, of 15.0 mm to 50.0 mm, in particular of 20.0 mm to 45.0 mm.

9. Commercial vehicle tyre according to one of Claims 1 to 8, **characterized in that**, when seen in the cross section of the tyre, the covering parts (9a, 9b, 9c, 9d) of the belt edge covering (9, 9', 9") have in the axial direction in each case a width (b_{P1}) of 5.0 mm to 20.0 mm, in particular of 10.0 mm to 15.0 mm.

10. Commercial vehicle tyre according to one of Claims 1 to 9, **characterized in that** each covering part (9a, 9b, 9c, 9d) of the belt edge covering (9, 9', 9") is in each case
a) either a belt edge surround (9a, 9b), which, when seen in the cross section of the tyre, is configured as symmetrically or asymmetrically U-shaped, with a radially outer turn-up and a radially inner turn-up, and surrounds the belt edge and a longitudinal bordering portion of the respective working ply (2a, 2c),
b) or a belt edge strip (9c, 9d), which, when seen in the cross section of the tyre, runs between a ply bordering portion of the respective working ply (2a, 2c) and the belt edge cushion (8) and preferably runs out beyond the belt edge of the respective working ply (2a, 2c) in the direction of the next-lying sidewall (5) while in contact with the belt edge cushion (8).

11. Commercial vehicle tyre according to one of Claims 1 to 10, **characterized in that** the breaker belt assembly (2) has precisely three belt plies (2a, 2b, 2c), and consequently the radially inner working ply (2a), the radially outer working ply (2c) and the 0° ply (2b).

12. Commercial vehicle tyre according to one of Claims 1 to 10, **characterized in that** the breaker belt assembly (2') has precisely four belt plies (2a, 2b, 2c, 2d), to be specific the radially inner working ply (2a), the radially outer working ply (2c), the 0° ply (2b) and a barrier ply (2d) arranged radially inside the radially inner working ply (2a), wherein the barrier ply (2d) is preferably made narrower in the axial direction than the working plies (2a, 2c) and wherein the reinforcing members of the barrier ply (2d) run - in each case in relation to the circumferential direction - at an angle (δ) of 40° to 70°, in particular of 45° to 65°, preferably of up to 60°, particularly preferably of up to 55°, and preferably steadily rising to the reinforcing members of the radially inner working ply (2a).

13. Commercial vehicle tyre according to one of Claims 1 to 10, **characterized in that** the breaker belt assembly (2") has precisely four belt plies (2a, 2b, 2c, 2e), to be specific the radially inner working ply (2a), the radially outer working ply (2c), the 0° ply (2b) and a protective ply (2e) arranged radially outside the radially outer working ply (2c), wherein the protective ply (2e) is made narrower in the axial direction than the working plies (2a, 2c) and wherein the reinforcing members of the protective ply (2e) run - in each case in relation to the circumferential direction - at an angle (ε) of 10° to 25°, in particular of 15° to 23°.

14. Commercial vehicle tyre according to one of Claims 1 to 10, **characterized in that** the breaker belt assembly (2‴) has precisely five belt plies (2a, 2b, 2c, 2d, 2e), to be specific the radially inner working ply (2a), the radially outer working ply (2c), the 0° ply (2b), a barrier ply (2d) arranged radially inside the radially inner working ply (2a) and a protective ply (2e) arranged radially outside the radially outer working ply (2c),
wherein the barrier ply (2d) is preferably made narrower in the axial direction than the working plies (2a, 2c) and wherein the reinforcing members of the barrier ply (2d) run - in each case in relation to the circumferential direction - at an angle (δ) of 40° to 70°, in particular of 45° to 65°, preferably of up to 60°, particularly preferably of up to 55°, and preferably steadily rising to the reinforcing members of the radially inner working ply (2a),
wherein the protective ply (2e) is made narrower in the axial direction than the working plies (2a, 2c) and wherein the reinforcing members of the protective ply (2e) run - in each case in relation to the circumferential direction - at an angle (ε) of 10° to 25°, in particular of 15° to 23°.

15. Commercial vehicle tyre according to one of Claims 1 to 14, **characterized in that** the reinforcing member of the 0° ply (2b) is a high-elongation steel cord, which has an elongation at break (ε_{B}) according to ASTM D 2969-04 of at most 7.5%, in particular of at most 6.0%, preferably of at most 5.5%, and particularly preferably of at most 5.0%.

## Revendications

1. Pneu de véhicule utilitaire avec un ensemble ceinture (2, 2', 2", 2"') avec au moins trois couches de ceinture (2a, 2b, 2c) situées les unes sur les autres composées d'éléments de renfort intégrés dans un caoutchouc de ceinture, s'étendant parallèlement les uns aux autres, en particulier de câbles, les couches de ceinture (2a, 2b, 2c) étant une couche de travail radialement intérieure (2a), une couche de travail radialement extérieure (2c) et une couche O° (2b) situées entre celles-ci, les éléments de renfort de la couche O° (2b) s'étendant par rapport à la direction périphérique selon un angle (ß) allant jusqu'à 5° et les éléments de renfort des couches de travail (2a, 2c) s'étendant par rapport à la direction périphérique selon un angle (α, γ) de 10° à 35°, les éléments de renfort des couches de travail (2a, 2c) étant orientés par rapport à la direction périphérique en sens opposé les uns par rapport aux autres,
un rembourrage de bordure de ceinture (7, 7', 7") séparant les couches de travail (2a, 2c) les unes des autres, qui comprend un coussin de bordure de ceinture (8) s'étendant entre les couches de travail (2a, 2c) et une couverture de bordure de ceinture (9, 9', 9") avec une partie de recouvrement radialement intérieure (9a, 9c) séparant la bordure de ceinture respective de la couche de travail radialement intérieure (2c) du coussin de bordure ceinture (8) et une partie de recouvrement radialement extérieure (9b, 9d) séparant la bordure de ceinture respective de la couche de travail radialement extérieure (2c) du coussin de bordure de ceinture (8), étant contenu dans chaque zone d'épaulement,
le coussin de bordure de ceinture (8) étant constitué d'un premier matériau en caoutchouc et les parties de recouvrement (9a, 9b, 9c, 9d) étant constituées d'un deuxième matériau en caoutchouc différent du premier matériau en caoutchouc, **caractérisé en ce**
**que** le rembourrage de bordure de ceinture (7, 7', 7") est formé à partir du coussin de bordure de ceinture (8) et de la couverture de bordure de ceinture (9, 9', 9"), les parties de recouvrement (9a, 9b, 9c, 9d) de la couverture de bordure de ceinture (9, 9', 9") entrant en contact avec le coussin de bordure de ceinture (8),
- le premier matériau en caoutchouc, duquel est constitué le coussin de bordure de ceinture (8),
présentant un facteur de perte maximum tan δₘₐₓ à 55°C, déterminé selon la norme DIN 53 513, édition 1990-03, de 0,05 à 0,10 et
- le deuxième matériau en caoutchouc, duquel sont constituées les parties de recouvrement (9a, 9b, 9c, 9d),
présentant une rigidité dynamique E' à 0,15 % d'allongement et à 55°C, déterminée selon la norme DIN 53 513, édition 1990-03, de 15,0 MPa à 25,0 MPa et
présentant une rigidité dynamique E' à 8 % d'allongement et à 55°°C, déterminée selon la norme DIN 53 513, édition 1990-03, de 5,0 MPa à 15,0 MPa ;
les paramètres de mesure pour déterminer le facteur de perte maximum tan δmax, la rigidité dynamique E' à 0,15 % d'allongement et la rigidité dynamique E' à 8 % d'allongement déterminés selon la norme DIN 53 513, les éprouvettes étant fabriquées à une température de vulcanisation de 160°°C et une durée de vulcanisation de 15 minutes étant : 20 % de compression, fréquence 10 Hz, balayage de contrainte, 0,15 % d'amplitude d'allongement pour définir la rigidité dynamique E' à 0,15 % d'allongement, 8,0 % d'amplitude d'allongement pour définir la rigidité dynamique E' à 8 % d'allongement, température 55 °C.

2. Pneu de véhicule utilitaire selon la revendication 1, **caractérisé en ce que** le premier matériau de caoutchouc, dont est constitué le coussin de bordure de ceinture (8),
présente une rigidité dynamique E' à 0,15 % d'allongement et à 55 °C, déterminée selon la norme DIN 53 513, édition 1990-03, de 3,0 MPa à 8,0 MPa et/ou
une rigidité dynamique E' à 8 % d'allongement et à 55 °C, déterminée selon la norme DIN 53 513, édition 1990-03, de 2,0 MPa à 7,0 MPa et/ou
une élasticité de rebond à 23 °C±1 °C, déterminée selon la norme DIN 53 512, édition 2000-04, de 52,0 à 60,0 ;
l'élasticité de rebond à 23 °C±1 °C étant déterminée selon la norme DIN 53 512, les éprouvettes étant fabriquées à une température de vulcanisation de 160°C et pendant une durée de vulcanisation de 15 minutes, épaisseur des éprouvettes de 6,3 mm ± 0,3 mm.

3. Pneu de véhicule utilitaire selon la revendication 1 ou 2, **caractérisé en ce que** le deuxième matériau en caoutchouc, dont les parties de recouvrement (9a, 9b, 9c, 9d) sont constituées, présente un facteur de perte maximal tan δₘₐₓ à 55 °C, déterminé selon la norme DIN 53 513, édition 1990-03, de 0,12 à 0,17 et/ou une élasticité de rebond à 23 °C±1 °C, déterminée selon la norme DIN 53 512, édition 2000-04, de 40,0 à 50,0.

4. Pneu de véhicule utilitaire selon l'une des revendications 1 à 3, **caractérisé en ce que** le rembourrage de bordure de ceinture (7, 7', 7") présente une épaisseur maximale (d_{P}) de 5,0 mm à 15,0 mm, en particulier de 7,0 mm à 12,0 mm, mesurée dans la direction radiale et non à travers les couches de ceinture (2a, 2b, 2c).

5. Pneu de véhicule utilitaire selon l'une des revendications 1 à 4, **caractérisé en ce que** le rembourrage de bordure de ceinture (7, 7', 7") est réalisé de telle manière qu'une distance (a_{K}), qui est mesurée entre la couche de travail radialement intérieure (2a) et la couche de travail radialement extérieure (2b) ainsi que le long d'une ligne auxiliaire (h₂) s'étendant dans la direction radiale par la bordure de ceinture de la couche de travail la plus étroite (2a, 2b), qui est en particulier la couche de travail radialement extérieure (2c), va de 2,0 mm à 6,0 mm, en particulier de 3,0 mm à 5,0 mm.

6. Pneu de véhicule utilitaire selon l'une des revendications 1 à 5, **caractérisé en ce que** le coussin de bordure de ceinture (8), vu dans la section transversale de pneu, est constitué d'une section de coussin de bordure de ceinture côté épaulement (8a) et d'une section de coussin de bordure de ceinture côté intérieur (8b) s'étendant entre la couche de travail radialement intérieure (2a) et la couche de travail radialement extérieure (2c), la division en les sections de coussin de bordure de ceinture (8a, 8b) étant effectuée le long d'une ligne auxiliaire (h₁) s'étendant dans la direction radiale à travers la bordure de ceinture de la couche de travail la plus large (2a, 2c), la couche de travail la plus large (2a, 2c) étant en particulier la couche de travail radialement intérieure (2a).

7. Pneu de véhicule utilitaire selon la revendication 6, **caractérisé en ce que** la section de coussin de bordure de ceinture côté épaulement (8a), vue dans la section transversale de pneu, comporte une largeur (b_{Pa}) de 5,0 mm à 30,0 mm, en particulier de 10,0 mm à 20,0 mm projetée dans la direction axiale, déterminée entre la ligne auxiliaire (h₁) et une ligne de délimitation (L_{R}) délimitant celle-ci à l'extérieur axialement, s'étendant dans la direction radiale.

8. Pneu de véhicule utilitaire selon la revendication 6 ou 7, **caractérisé en ce que** la section de coussin de bordure de ceinture côté intérieur (8b) comporte, vue dans la section transversale de pneu, une largeur de 15,0 mm à 50,0 mm, en particulier de 20,0 mm à 45,0 mm projetée dans la direction axiale, déterminée entre la ligne auxiliaire (h₁) et une ligne de délimitation (L_{R}) délimitant celle-ci à l'intérieur axialement, s'étendant dans la direction radiale.

9. Pneu de véhicule utilitaire selon l'une des revendications 1 à 8, **caractérisés en ce que** les parties de recouvrement (9a, 9b, 9c, 9d) de la couverture de bordure de ceinture (9, 9', 9") comportent, vues dans la coupe transversale de pneu, chacune dans la direction axiale une largeur (b_{P1}) de 5,0 mm à 20,0 mm, en particulier de 10,0 mm à 15,0 mm.

10. Pneu de véhicule utilitaire selon l'une des revendications 1 à 9, **caractérisé en ce que** chaque partie de recouvrement (9a, 9b, 9c, 9d) de la couverture de bordure de ceinture (9, 9', 9") respectivement
a) est soit un rebord de bordure de ceinture (9a, 9b) qui est réalisé, vu dans la section transversale de pneu, en forme de U symétriquement ou asymétriquement avec un rabattement radialement extérieur et un rabattement radialement intérieur et borde la bordure de ceinture ainsi qu'une section de bord de couche de la couche de travail respective (2a, 2c),
b) soit une bande de bordure de ceinture (9c, 9d), qui s'étend, vue dans la section transversale de pneu, entre une section de bord de couche de la couche de travail (2a, 2c) respective et le coussin de bordure de ceinture (8) et s'étend, de manière préférée, dans la direction de la paroi latérale la plus proche (5) en contact avec le coussin de bordure de ceinture (8) au-delà de la bordure de la couche de travail (2a, 2c) respective.

11. Pneu de véhicule utilitaire selon l'une des revendications 1 à 10, **caractérisé en ce que** l'ensemble ceinture (2) comporte exactement trois couches de ceinture (2a, 2b, 2c) et donc la couche de travail radialement intérieure (2a), la couche de travail radialement extérieure (2c) et la couche 0° (2b).

12. Pneu de véhicule utilitaire selon l'une des revendications 1 à 10, **caractérisé en ce que** l'ensemble ceinture (2') comporte exactement quatre couches de ceinture (2a, 2b, 2c, 2d), à savoir la couche de travail radialement intérieure (2a), la couche de travail radialement extérieure (2c), la couche 0° (2b) ainsi qu'une couche de verrouillage (2d) disposée radialement à l'intérieur de la couche de travail radialement intérieure (2a), la couche de verrouillage (2d) étant réalisée dans la direction axiale de préférence plus étroite que les couches de travail (2a, 2c) et les éléments de renfort de la couche de verrouillage (2d) s'étendant - respectivement par rapport à la direction périphérique - selon un angle (δ) de 40° à 70°, en particulier de 45° à 65°, de manière préférée jusqu'à 60°, de manière particulièrement préférée jusqu'à 55°, et de préférence avec une pente identique par rapport aux éléments de renfort de la couche de travail radialement intérieure (2a).

13. Pneu de véhicule utilitaire selon l'une des revendications 1 à 10, **caractérisé en ce que** l'ensemble ceinture (2") comporte exactement quatre couches de ceinture (2a, 2b, 2c, 2e), à savoir la couche de travail radialement intérieure (2a), la couche de travail radialement extérieure (2c), la couche 0° (2b) et une couche de protection (2e) disposée radialement à l'extérieur de la couche de travail radialement extérieure (2c), la couche de protection (2e) étant réalisée plus étroite dans la direction axiale que les couches de travail (2a, 2c) et les éléments de renfort de la couche de protection (2e) s'étendant - par rapport à la direction périphérique - selon un angle (ε) de 10° à 25°, en particulier de 15° à 23°.

14. Pneu de véhicule utilitaire selon l'une des revendications 1 à 10, **caractérisé en ce que** l'ensemble ceinture (2"') comporte exactement cinq couches de ceinture (2a, 2b, 2c, 2d, 2e), à savoir la couche de travail radialement intérieure (2a), la couche de travail radialement extérieure (2c), la couche 0° (2b), une couche de verrouillage (2d) disposée radialement à l'intérieur de la couche de travail radialement intérieure (2a), ainsi qu'une couche de protection (2e) disposée radialement à l'extérieur de la couche de travail radialement extérieure (2c),
la couche de verrouillage (2d) étant réalisée dans la direction axiale de préférence plus étroite que les couches de travail (2a, 2c) et les éléments de renfort de la couche de verrouillage (2d) s'étendant - respectivement par rapport à la direction périphérique - selon un angle (δ) de 40° à 70°, en particulier de 45° à 65°, de manière préférée jusqu'à 60°, de manière particulièrement préférée jusqu'à 55°, et de préférence avec une pente identique par rapport aux éléments de renfort de la couche radialement intérieure (2a),
la couche de protection (2e) étant réalisée dans la direction axiale plus étroite que les couches de travail (2a, 2c) et les éléments de renfort de la couche de protection (2e) s'étendant - respectivement par rapport à la direction périphérique - selon un angle (ε) de 10° à 25°, en particulier de 15° à 23°.

15. Pneu de véhicule utilitaire selon l'une des revendications 1 à 14, **caractérisé en ce que** l'élément de renfort de la couche 0° (2b) est un câblé d'acier à allongement élevé, qui présente un allongement à la rupture (ε_{B}) selon la norme ASTM D 2969-04 de 7,5 % au maximum, en particulier de 6,0 % au maximum, de préférence de 5,5 % au maximum, et de manière particulièrement préférée de 5,0 % au maximum.
